(19) Europäisches Patentamt
European Patent Office
Office européen des brevets

(11) **EP 4 755 738 A1**

(12) **EUROPÄISCHE PATENTANMELDUNG**

(43) Veröffentlichungstag:
**10.06.2026  Patentblatt 2026/24**

(21) Anmeldenummer: **25213545.4**

(22) Anmeldetag: **05.11.2025**

(51) Internationale Patentklassifikation (IPC):
**B60T 13/66** (2006.01)   **B60T 17/22** (2006.01)
**B61H 1/00** (2006.01)   **F16D 65/56** (2006.01)
**F16D 66/02** (2006.01)   **B61H 15/00** (2006.01)
**F16D 65/28** (2006.01)

(52) Gemeinsame Patentklassifikation (CPC):
**B60T 17/228; B60T 13/665; B61H 1/00;
B61H 15/0007; F16D 49/16; F16D 65/28;
F16D 65/56; F16D 66/025; F16D 66/027;**
F16D 2066/003

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität:  **04.12.2024  DE 102024136135**

(71) Anmelder: **KNORR-BREMSE
Systeme für Schienenfahrzeuge GmbH
80809 München (DE)**

(72) Erfinder:
• **ELSTORPFF, Marc-Gregory**
**80368 München (DE)**
• **KATONA, Geza**
**1191 Budapest (HU)**
• **MÜLLEK, Ferenc**
**8000 Szekesfehervar (HU)**
• **JENEI, Bela**
**1118 Budapest (HU)**
• **EROSS, Lajos**
**2030 Erd (HU)**
• **MADARASZ, Benjamin**
**1201 Budapest (HU)**

(54) **SCHIENENFAHRZEUGBREMSE, INSBESONDERE FÜR GÜTERWAGGONS, MIT ÜBERWACHUNGSEINRICHTUNG, UND VERFAHREN ZUM ÜBERWACHEN EINER SCHIENENFAHRZEUGBREMSE**

(57)    Eine Schienenfahrzeugbremse (1), insbesondere für Güterwaggons, umfasst ein Bremsgestänge (1a) mit Bremsklötzen (5), einen Bremszylinder (3), einen Gestängesteller (4) und eine Überwachungseinrichtung (10). Die Überwachungseinrichtung (10) weist Erfassungseinheiten (7, 7a, 7b, 7c, 7d, 8, 9) mit jeweiligen Sensoren (71, 72, 73, 74, 75, 77, 81, 82, 90) auf, deren Versorgung mit elektrischer Energie mittels eines Zugriffs auf ein elektrisches Energieversorgungsnetz eines zuzuordnenden Schienenfahrzeugs gebildet ist. Ein Schienenfahrzeug und ein Verfahren zum Überwachen einer Schienenfahrzeugbremse 1 werden bereitgestellt.

Fig. 1

EP 4 755 738 A1

**Beschreibung**

Die Erfindung betrifft eine Schienenfahrzeugbremse, insbesondere für Güterwaggons, mit Überwachungseinrichtung nach dem Oberbegriff des Anspruchs 1. Die Erfindung bezieht sich auch auf ein Schienenfahrzeug und ein Verfahren zum Überwachen einer Schienenfahrzeugbremse.

Es gibt zwei traditionelle Bremssysteme für Güterwagen, die als Profilbremssystem bezeichnet werden. Die ältere Version verfügt über einen individuellen Bremszylinder und einen individuellen Gestängesteller, der auch als Nachsteller bezeichnet wird. Die neuere Version integriert den Bremszylinder und den Gestängesteller in einer gemeinsamen Baueinheit. Diese beiden Bremssysteme werden auch als Laufflächen- oder Profilbremsen bezeichnet und weisen Bremsklötze auf, welche beim Bremsen die Laufflächen der Räder kontaktieren.

Die vorliegende Erfindung bezieht sich auf eine Schienenfahrzeugbremse als Bremssystem für Güterwaggons als Laufflächenbremseinheit mit integrierter Gestängestellereinheit (CFCB), oder individueller Gestängestellereinheit (Bremsgestänge mit Gestängesteller und Bremszylinder).

Zur Überwachung der Schienenfahrzeugbremse können mehrere Messungen durchgeführt werden, die dazu führen können, Echtzeit-Statusinformationen zu extrahieren und manuell durchgeführte Prozesse zu automatisieren.

Messsysteme in Bremsanlagen dienen unter anderem dazu, die korrekte Funktion einer Bremse vor und während des Betriebs zu ermitteln. In der Regel gehören Bremstests vor dem Betrieb zu den vorgeschriebenen Standardverfahren vor der Inbetriebnahme eines Schienenfahrzeugs. Es ist sicherzustellen, dass alle Bremsen betriebsbereit sind.

Derzeit wird der Bremsstatus in den meisten Fällen durch visuelle Kontrolle des Bremsbelagspiels oder/und manuelle Bewegung der Bremsbeläge oder Bremsbacken kontrolliert. Darüber hinaus werden der Belagverlust und der Belagverschleiß kontrolliert.

Aufgrund der mechanischen Waggonkupplungen gibt es in der aktuellen Marktsituation keine über die Waggonkupplung übertragebare elektrische Stromversorgung in den Güterwaggons. Denn die Europäische Union hat sich in dem so genannten "Green Deal" zum Ziel gesetzt, die traditionelle Schraubenkupplung durch ein Digital Automatic Coupling (DAC)-System zu ersetzen. Dadurch ergibt sich die Möglichkeit, Detektor-/Erfassungssysteme in Güterwaggons einzusetzen. Darüber hinaus können auch herkömmliche Personenwaggons und Schienensonderfahrzeuge von den Vorteilen profitieren.

Es sind verschiedene, nicht serienmäßige Techniken bekannt, um Informationen über die korrekte Funktion einer Bremse bei stehendem und bewegtem Schienenfahrzeug abzuleiten. In manchen Fällen wird ein Bremsstatus aus der Bewegung eines Bremsaktuators unter serienmäßigen Bedingungen, beispielsweise eines Kolbens, abgeleitet. Darüber hinaus kann nicht nur die korrekte Funktion, sondern auch ein Verlust eines Bremsbelags festgestellt werden.

Eine Auswertung der von Erfassungseinheiten (Detektoren) bereitgestellten Signale und die Übermittlung der Information über eine ordnungsgemäße Funktion der Bremse erfordert zum Betrieb elektrische Energie und damit den Zugriff auf ein elektrisches Energieversorgungsnetz des Schienenfahrzeugs. Mit der Digitalen Automatischen Kupplung DAC wird dies auch für Güterzüge möglich sein.

Die Aufgabe der Erfindung besteht daher darin, eine Schienenfahrzeugbremse, insbesondere für Güterwaggons, mit einer Überwachungseinrichtung, und ein Verfahren zum Überwachen einer Schienenfahrzeugbremse zu schaffen.

Diese Aufgabe wird durch die Gegenstände der unabhängigen Ansprüche gelöst.

Ein Erfindungsgedanke besteht darin, Detektorsysteme auch in Güterwaggons einzusetzen.

Eine erfindungsgemäße Schienenfahrzeugbremse, insbesondere für Güterwaggons, umfasst ein Bremsgestänge mit Bremsklötzen, einen Bremszylinder, einen Gestängesteller und eine Überwachungseinrichtung. Die Überwachungseinrichtung weist Erfassungseinheiten mit jeweiligen Sensoren auf, deren Versorgung mit elektrischer Energie mittels eines Zugriffs auf ein elektrisches Energieversorgungsnetz eines zuzuordnenden Schienenfahrzeugs gebildet ist.

Ein besonderer Vorteil hierin besteht, dass mittels der Überwachungseinrichtung mit den Erfassungseinheiten, die jeweiligen Funktionsgruppen Bremsgestänge, Bremszylinder, Gestängesteller u.a. zugeordnet sind, eine einfache und übergreifend angeordnete Überwachung einer Schienenfahrzeugbremse ermöglicht wird.

Ein weiterer Vorteil ist es, dass zur Überwachung der Schienenfahrzeugbremse mehrere Messungen durchgeführt werden, die dazu führen können, Echtzeit-Statusinformationen zu extrahieren und manuell durchgeführte Prozesse zu automatisieren.

Ein erfindungsgemäßes Schienenfahrzeug, insbesondere Güterwaggon, weist die oben beschriebene Schienenfahrzeugbremse auf.

Ein erfindungsgemäßes Verfahren zum Überwachen einer oben beschriebenen Schienenfahrzeugbremse, insbesondere Güterwaggon, weist die folgenden Verfahrensschritte auf: (VS1) Bereitstellen eines Schienenfahrzeugbremse mit einer Überwachungseinrichtung mit Erfassungseinheiten und Anschließen von Sensoren der Erfassungseinheiten an ein elektrisches Energieversorgungsnetz des Schienenfahrzeugs mit Digitaler Automatischer Kupplung DAC; (VS2) Erzeugen von jeweiligen elektrischen Signalen von den Sensoren der Erfassungseinheiten in Abhängigkeit von Zuständen der Schienenfahrzeugbremse; und (VS3) Überwachen der so erhaltenen Signale und Vergleichen der erhaltenen Signale in einer Auswerteeinheit mit vorher gespeicherten Referenzwerten und Ausgeben von Ergebniswerte des Vergleichens als Ausgabe in optischer, akustischer, haptischer oder/und elektronischer Form. Diese Signale können auch drahtlos übertragen werden, z.B. mittels Funk, Ultraschall, Infrarot u.dgl.

Auf diese Weise können vorteilhaft mehrere Messungen zur Überwachung der Schienenfahrzeugbremse durchgeführt werden, z.B. von zentraler Stelle aus, um Echtzeit-Statusinformationen zu extrahieren.

Besonders vorteilhaft ist es, dass bisher manuell ausgeführte Prozesse automatisiert werden können, wodurch sich auch Zeitersparnis ergibt.

Weitere vorteilhafte Ausgestaltungen sind in den Unteransprüchen angegeben.

In einer Ausführung weist das elektrische Energieversorgungsnetz des Schienenfahrzeugs Digitale Automatische Kupplungen DAC auf. Damit lassen sich elektrische Energieversorgungen von Güterwaggons eines Zuges auf einfache Weise mittels der DAC herstellen und kuppeln.

In einer anderen Ausführung ist eine erste Erfassungseinheit dem Gestängesteller zugeordnet und weist mindestens einen Sensor auf, welcher einen Stellhub zwischen einem Zylindergehäuse des Gestängestellers und einer Position einer Stellstange des Gestängestellers erfasst. Damit kann ein Bremszustand vorteilhaft einfach erfasst werden.

Dabei ist der Stellhub ein Abstand zwischen einem ersten Gehäuseende des Zylindergehäuses des Gestängestellers und einem Stellkopf, welcher mit der Stellstange des Gestängestellers fest verbunden ist. So kann der Stellhub vorteilhaft einfach ermittelt werden.

Es ist in einer weiteren Ausführung vorgesehen, dass die erste Erfassungseinheit einen in Bezug auf die Stellstange radial mit seiner aktiven Seite angeordneten Sensor oder/und einen weiteren Sensor aufweist, welcher mit seiner aktiven Seite axial in Bezug auf die Stellstange angeordnet ist. Hierbei können vorteilhaft Annäherungsschalter bzw. Abstandserfassungssensoren auf induktiver Basis eingesetzt werden. Aber auch andere, wie z.B. elektromechanische Abstandsdetektoren, sind möglich.

Der weitere Sensor könnte dieser z.B. ein redundanter Sensor für eine Plausibilisierung der Signale des ersten Sensors sein.

Vorteilhaft dabei ist es, dass die Sensoren kostengünstig, z.B. auch als Standardbauteile mit hoher Qualität und Präzision verfügbar sind.

Wenn der mindestens eine Sensor oder die beiden Sensoren an der ortsfesten Stellstange direkt oder indirekt befestigt sind, ergibt sich ein vorteilhaft kompakter Aufbau. Ein weiterer Vorteil besteht darin, dass sich der Sensor am Drehgestell oder Untergestell des Schienenfahrzeugs befindet, sodass sich ein Elektrokabel während des Zugbetriebs nicht bewegt und das Kabel daher sehr robust sein kann.

Eine andere weitere Ausführung sieht vor, dass eine zweite Erfassungseinheit mit mindestens einem Sensor dem Gestängesteller zugeordnet ist, wobei der mindestens eine Sensor an einem ortsfesten Schutzrohr einer Stellspindel des Gestängestellers angeordnet ist und eine Position der beweglichen Stellspindel erfasst. Auf diese Weise kann der Bremsstatus vorteilhaft einfach ermittelt werden

In einer weiteren Ausführung ist die Stellspindel mit mindestens einer von dem mindestens einen Sensor erfassbaren Markierung versehen, deren Position einem Verschleißzustand der Bremsklötze entspricht. Dies ist ein vorteilhaft kompakter und einfacher Aufbau.

In einer noch weiteren Ausführung ist eine dritte Erfassungseinheit mit mindestens einem Sensor dem Gestängesteller zugeordnet, wobei der mindestens eine Sensor an einer beweglichen Stellspindel des Gestängestellers befestigt ist und einen Abstand zu einer ortsfesten Referenz, die an einem ortsfesten Schutzrohr direkt oder indirekt angebracht ist, erfasst, wobei dieser Abstand proportional zu einer tatsächlichen Dicke des Bremsbelags ist. Der Vorteil hierbei besteht darin, dass ein einfacher Aufbau möglich ist.

Eine andere Ausführung sieht vor, dass eine vierte Erfassungseinheit mit mindestens einem Sensor dem Gestängesteller zugeordnet ist, wobei der mindestens eine Sensor in einem Gehäuse zwischen einem ersten Stangenabschnitt der Stellstange und einem zweiten Stangenabschnitt der Stellstange des Gestängestellers angeordnet ist, wobei das Gehäuse in Reihe zwischen den Stangenabschnitten der Stellstange angeordnet ist. Es ergibt sich eine vorteilhaft kompakte Anbringung an dem Gestängesteller mit geringem Platzbedarf.

Es ist zudem vorteilhaft, wenn der erste Stangenabschnitt mit seinem Ende mit einem Stellkopf fest verbunden ist und mit dem anderen Ende mit dem Gehäuse fest verbunden ist, wobei der zweite Stangenabschnitt mit dem ersten Stangenabschnitt fluchtend in dem Gehäuse direkt oder indirekt längsverschiebbar gelagert ist, da so nur geringe Änderungen an vorhandenen Bauteilen notwendig sind.

In einer weiteren Ausführung bildet das Gehäuse mit dem zweiten Stellstangenabschnitt der Stellstange einen Teleskopmechanismus mit einem kleinen Hub, der in einem Größenbereich von 1 mm liegt, wobei dieser Hub den Sensor mittels eines Schwenkhebels betätigt. Damit ist eine vorteilhaft einfache mechanische Anpassung an einen Betätigungshub des Sensors möglich.

Dabei steht eine Stirnfläche des zweiten Stangenabschnitts, welche zu dem ersten Stangenabschnitt weist, mit dem verschwenkbaren Schwenkhebel in Kontakt, welcher einen Betätiger des mindestens einen Sensors kontaktiert. Der Vorteil hierbei besteht in einem geringen Platzbedarf.

In einer noch weiteren Ausführung ist eine fünfte Erfassungseinheit mit mindestens einem Sensor dem Gestängesteller zugeordnet, wobei der Sensor in einer Bohrung des Stellkopfes aufgenommen ist und mit einem Abschnitt eines Zylindergehäuses zusammenwirkt und so eine Grundstellung und eine Bremsstellung erfasst. Ein Vorteil hierbei besteht darin, dass der Sensor vor äußeren Einflüssen, insbesondere Steinschlag, in dem Stellkopf geschützt ist.

Ein weiterer Vorteil ergibt sich dadurch, dass eine einfache Befestigung, insbesondere axiale Fixierung, des Sensors in der Bohrung möglich ist.

Es ist vorteilhaft, wenn der Sensor in einer Hülse angeordnet ist, da der Sensor mit der Hülse vormontiert und somit vorteilhaft einfach eingebaut und gewechselt werden kann.

Eine weitere Ausführung sieht vor, dass die Bohrung des Stellkopfes schräg zu der Stellstange angeordnet ist. Dies ist vorteilhaft für einen einfachen Einbau und zur Anordnung einer aktiven Seite des Sensors zu dem Zylindergehäuse. Zudem kann ein Anschlusskabel des Sensors sehr nahe zur Stellstange befestigt und geschützt in einem Wagenkasten weitergeführt werden.

In einer anderen Ausführung ist eine sechste Erfassungseinheit dem Bremszylinder zugeordnet und weist mindestens einen Sensor auf, welcher eine Position einer Kolbenstange des Bremszylinders erfasst und ortsfest am Bremszylinder befestigt ist. Auf diese Weise lässt sich der Status der Bremszylinders vorteilhaft einfach ermitteln.

Dabei ist vorgesehen, dass die sechste Erfassungseinheit einen in Bezug auf die Kolbenstange des Bremszylinders radial mit seiner aktiven Seite angeordneten Sensor und einen weiteren Sensor aufweist, welcher mit seiner aktiven Seite axial in Bezug auf die Kolbenstange des Bremszylinders angeordnet ist, wobei die Sensoren mit einer Referenz zusammenwirken, die an der beweglichen Kolbenstange des Bremszylinders befestigt ist. Dies ergibt einen vorteilhaft einfachen und kompakten Aufbau.

Unter der "aktiven Seite" des Sensors ist die Seite zu verstehen, welche zur Erfassung von Gegenständen (induktiv, optisch, mechanisch) die größte Empfindlichkeit aufweist. Im Falle von elektromechanischen Schaltern ist dieses die Seite, an welcher sich ein Betätiger oder ähnliches befindet.

In einer noch anderen Ausführung ist mindestens eine weitere Erfassungseinheit mit mindestens einem Sensor mindestens einer Aufhängung des Bremsgestänges zugeordnet, wobei Halterungen der Aufhängungen Fixpunkte sind, an denen zugehörige Bauteile des Bremsgestänges verschwenkbar angelenkt sind, wobei Verschwenkbewegungen dieser Bauteile im Verhältnis zum Bremsvorgang und zum tatsächlichen Verschleißzustand der Bremsklötze von dem mindestens einen Sensor erfasst werden. Dies ergibt eine vorteilhaft einfache Erfassung des Verschleißzustandes.

Hierbei kann der mindestens eine Sensor als Winkelaufnehmer ausgebildet sein. Derartige Bauteile sind vorteilhaft marktüblich, kostengünstig und in hoher Qualität und Präzision erhältlich. Sie können beispielsweise als induktiver Sensor, Potentiometer oder Hall-Effekt-Sensor ausgebildet sein, es kann aber auch jede andere Methode angewendet werden, die in der Lage ist, die tatsächliche Position zu bestimmen.

In einer Ausführung des Verfahrens ist es vorgesehen, dass in dem dritten Verfahrensschritt VS3 Überwachen die erhaltenen Signale in drei Modi überwacht werden, wobei in einem ersten Modus ein Überwachen nur bei einem Bremsentest zu Beginn des Betriebs, in einem zweiten Modus ein Überwachen beim Bremsen, und in einem dritten Modus ein kontinuierliches Überwachen durchgeführt wird. Damit ergibt sich der Vorteil von einfachen Anpassungen an unterschiedliche Einsatzzwecke.

Ausführungsbeispiele der Erfindung werden nachfolgend anhand der beigefügten Zeichnungen beschrieben. Die Erfindung ist nicht auf diese Ausführungsbeispiele beschränkt. Insbesondere sind einzelne Merkmale der nachfolgenden Ausführungsbeispiele nicht nur bei diesem, sondern auch bei anderen Ausführungsbeispielen einsetzbar. Es zeigen:

Figur 1      eine schematische Symboldarstellung eines Ausführungsbeispiels einer erfindungsgemäßen Anordnung einer Schienenfahrzeugbremse mit einer Überwachungseinrichtung;

Figur 2      eine schematische Ansicht eines Gestängestellers des Ausführungsbeispiels nach Figur 1;

Figur 3      eine schematische Schnittansicht einer ersten Erfassungseinheit des Ausführungsbeispiels nach Figur 1;

Figur 4-5      schematische Schnittdarstellungen einer zweiten Erfassungseinheit und einer dritten Erfassungseinheit davon;

Figur 6-10      schematische Schnittdarstellungen einer vierten Erfassungseinheit;

Figur 11-14      schematische Ansichten einer fünften Erfassungseinheit;

Figur 15-16    schematische Teilschnittansichten von Bremszylindern;

Figur 17    eine schematische Teilschnittdarstellung eines Bremszylinders mit einer sechsten Erfassungseinheit; und

Figur 18    ein schematisches Flussdiagramm eines erfindungsgemäßen Verfahrens zum Überwachen einer Schienenfahrzeugbremse.

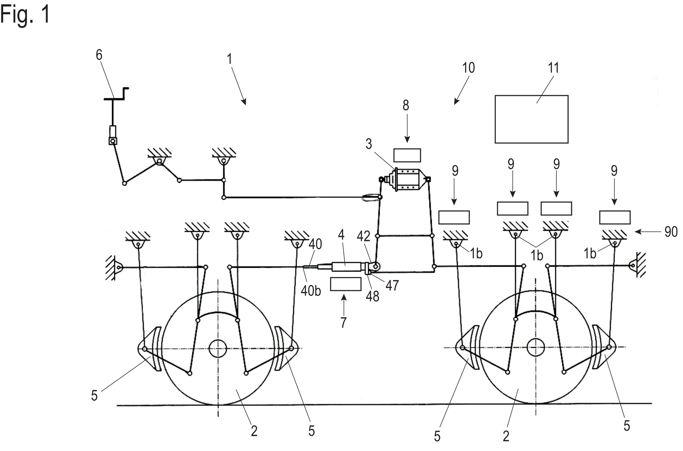

**Figur 1** zeigt eine schematische Symboldarstellung eines Ausführungsbeispiels einer erfindungsgemäßen Schienenfahrzeugbremse 1 mit einer Überwachungseinrichtung 10.

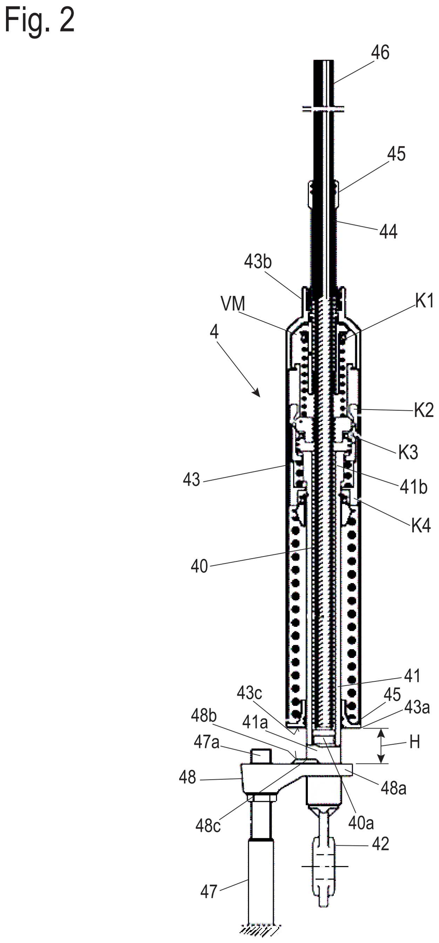

In **Figur 2** ist eine schematische Ansicht eines Gestängestellers 4 des Ausführungsbeispiels nach Figur 1 gezeigt.

Die Schienenfahrzeugbremse 1 ist hier als eine als ein Profilbremssystem für ein nicht gezeigtes aber leicht vorstellbares Schienenfahrzeug, beispielsweise ein Güterwaggon, mit Rädern 2 dargestellt. Die Schienenfahrzeugbremse umfasst hier einen individuellen und einen individuellen Gestängesteller 4, der auch als Nachsteller oder Nachstellvorrichtung bezeichnet wird. Zudem ist auch eine Handbremse 6 zur manuellen Betätigung als Feststellmöglichkeit vorgesehen.

Es ist auch möglich aber hier nicht dargestellt, dass der Gestängesteller 4 in den Bremszylinder 3 in einer gemeinsamen Baueinheit integriert sein kann. Die Schienenfahrzeugbremse 1 wird auch als Laufflächen- oder Profilbremsen bezeichnet, bei welcher Bremsklötze 5 beim Bremsen die Laufflächen der Räder 5 kontaktieren.

Der Bremszylinder 3 und der Gestängesteller 4 wirken mit einem nicht näher beschriebenen Bremsgestänge 1a zusammen, welches in Aufhängungen 1b an einem nicht gezeigten Rahmen des Schienenfahrzeugs gelenkig angebracht ist.

Weiterhin umfasst die Schienenfahrzeugbremse 1 eine Überwachungseinrichtung 10 mit Erfassungseinheiten 7, 8, 9 und einer Auswerteeinheit 11. Die Erfassungseinheit 7 ist dem Gestängesteller 4 und die Erfassungseinheit 8 ist dem Bremszylinder 3 zugeordnet. Zudem sind hier weitere Erfassungseinheiten 9 vorgesehen, von denen jede einer Aufhängung 1b zugeordnet ist.

Die Halterungen der Aufhängungen 1b sind Fixpunkte, an denen die zugehörigen Bauteile des Bremsgestänges 1a verschwenkbar angelenkt sind. Die Verschwenkbewegungen dieser Bauteile stehen im Verhältnis zum Bremsvorgang und zum tatsächlichen Verschleißzustand der Bremsklötze 5.

Die Erfassungseinheiten 9 weisen hier jeweils einen Sensor 90 auf. Der Sensor 90 ist z.B. als Winkelaufnehmer ausgebildet. Ein solches Messgerät bzw. Winkelsensor kann beispielsweise ein induktiver Sensor, ein Potentiometer oder ein Hall-Effekt-Sensor sein, es kann aber auch jede andere Methode angewendet werden, die in der Lage ist, die tatsächliche Winkelstellung des jeweiligen an einer jeweiligen Aufhängung angelenkten Bauteils des Bremsgestänges 1a zu bestimmen und als ein elektrisches Signal auszugeben.

Die anderen Erfassungseinheiten 7, 8 der Überwachungseinrichtung 10 werden im Weiteren noch ausführlich beschrieben.

Der Gestängesteller 4 gleicht ein zu geringes oder zu großes Spiel, das auch als Lüftspiel bezeichnet wird, der Bremsklötze 5 bei profilgebremsten bzw. laufflächengebremsten Schienenfahrzeugen aus. Der Gestängesteller 4 reagiert automatisch, wenn die Schienenfahrzeugbremse 1 betätigt wird.

Bei der Gestängesteller 4 handelt es sich um eine doppeltwirkende Einheit für den Einsatz in laufflächengebremsten Schienenfahrzeugen.

Doppeltwirkend bedeutet, dass der Gestängesteller 4 sowohl zu großes als auch zu geringes Lüftspiel der automatisch auf den gewünschten Wert korrigiert. Ein zu großes Lüftspiel entsteht beispielsweise, wenn die Bremsklötze 5 oder Radlaufflächen der Räder 2 abgenutzt sind, wohingegen ein unzureichendes Lüftspiel nach dem Austausch der Bremsklötze 5 auftreten kann.

Die Korrektur eines zu großen Lüftspiels erfolgt schnell und zuverlässig nach einer Bremsbetätigung, die Korrektur eines zu geringen Lüftspiels nach zwei Bremsbetätigungen. Gestängesteller 4 gibt es in verschiedenen Montagelängen mit unterschiedlichen Einstellkapazitäten.

Der Gestängesteller 4 stellt die Bremsklötze 5 automatisch nach und sorgt so für ein konstantes Lüftspiel, das weder durch Verschleiß noch durch den Austausch von Bremsklötzen 5 über den gesamten Einstellbereich beeinträchtigt wird. Der Kolbenhub des Bremszylinders 3 bleibt annähernd konstant, der Luftverbrauch ist gering. Der Gestängesteller 4 arbeitet unabhängig von der durch die Bremskraft verursachten elastischen Auslenkung des Bremsgestänges 1a.

Der Gestängesteller 4 umfasst in diesem Beispiel eine Stellspindel 40, ein Führungsmutterrohr 41, eine Lasche 42, ein Zylindergehäuse 43, ein Schutzrohr 44, Dichtungsringe 45 und 45a, eine Stellstange 47 und einen Stellkopf 48. Der Stellkopf 48 wird auch als Steuerbügel bezeichnet.

Die Stellspindel 40 ist in dem Führungsmutterrohr 41 angeordnet, das mit einem ersten Rohrende 41a mit einem ersten Spindelende 40a der Stellspindel verbunden ist.

Das erste Gehäuseende 43a des Zylindergehäuses 43 ist von einem ersten Dichtungsring 45 verschlossen. Der erste Dichtungsring 45 weist eine zentrale Öffnung auf, durch welche sich das Führungsmutterrohr 41 mit seinem ersten Rohrende 41a mit dem ersten Spindelende 40a der Stellspindel 40 hindurch erstreckt und von dem ersten Gehäuseende 43a des Zylindergehäuses 43 hervorsteht.

Der zweite Dichtungsring 45a bildet eine Dichtung des Führungsmutterrohrs 41a nach außen. Eine Außenseite einer Platte des ersten Dichtungsrings 45 weist zu einem Befestigungsabschnitt 48a des Stellkopfes 48 und weist eine Anschlagfläche 43c auf.

An dem aus dem ersten Gehäuseende 43a hervorstehenden ersten Rohrende 41a des Führungsmutterrohres 41 ist der Stellkopf 48 mit seinem Befestigungsabschnitt 48a angebracht. Der Stellkopf 48 weist eine Bohrung für die Stellstange 47 auf, deren Ende eines Stangenabschnitts 47a der Stellstange 47 aus dem Stellkopf 48 zu der Seite des Zylindergehäuses 43 hervorsteht. Die Stellstange 47 ist mit ihrem Stangenabschnitt 47a fest mit dem Stellkopf 48 verbunden.

Der Befestigungsabschnitt 48a ist mit dem Stellkopf 48 fest verbunden und weist ebenfalls eine Bohrung auf, durch welche sich das erste Rohrende 41a des Führungsmutterrohres 41 erstreckt. Dieses erste Rohrende 41a ist auf diese Weise in der Bohrung des Befestigungsabschnitts 48a des Stellkopfes 48 in Längsrichtung einer Mittelachse des Führungsmutterrohres 41 und somit des Zylindergehäuses 43 gegenüber dem Befestigungsabschnitt 48a des Stellkopfes 48 verschiebbar geführt angeordnet.

Die gemeinsame Mittelachse von Stellspindel 40, Führungsmutterrohr 41 und Zylindergehäuse 43 und die Mittelachse der Stellstange 47 sind parallel zueinander angeordnet.

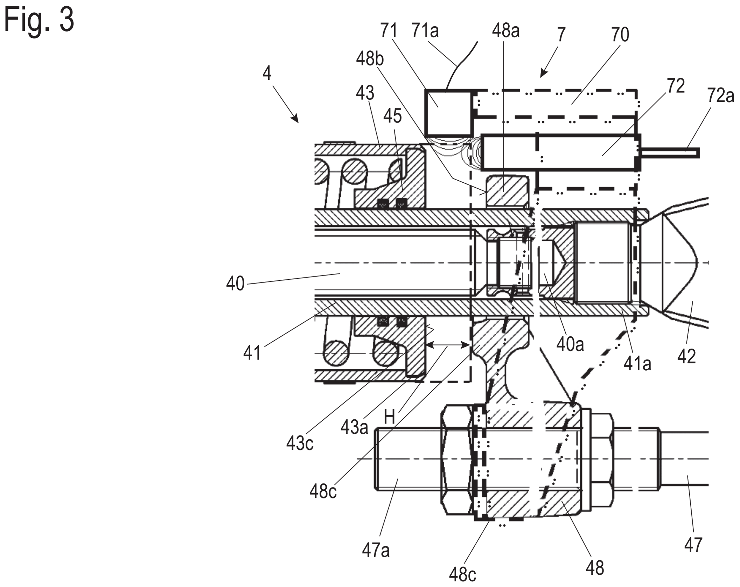

Die Lasche 42 ist an dem ersten Rohrende 41a des Führungsmutterrohres 41 angebracht (siehe Figur 3).

Die Stellspindel 40 erstreckt sich durch das Zylindergehäuse 43 von dessen erstem Gehäuseende 43a durch das Gehäuse 43, weiter durch ein zweites Gehäuseende 43b das Schutzrohr 44 hindurch, wobei ein zweites Spindelende 40b der Stellspindel 40 von einem freien Ende des Schutzrohres 44 relativ weit hervorsteht.

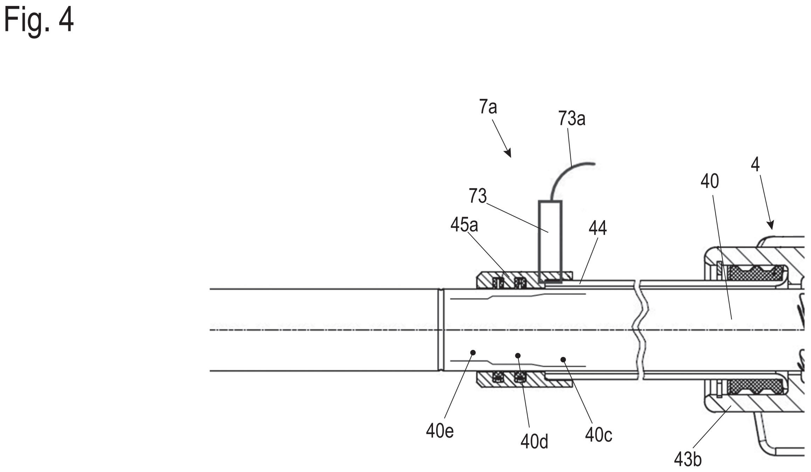

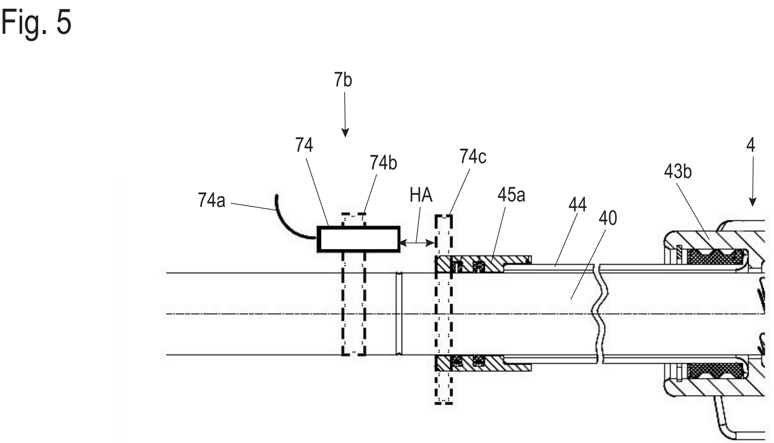

Das Schutzrohr 44 ist an dem zweiten Gehäuseende 43b des Zylindergehäuses 43 befestigt, wobei sich die Stellspindel 40 durch das Schutzrohr 44 hindurch erstreckt und von dessen freiem Ende hervorsteht (siehe auch Figur 4, 5). Das freie Ende des Schutzrohres 44 ist mit einem zweiten Dichtungsring 45a verbunden, welcher eine Abdichtung zu der hervorstehenden Stellspindel 40 ermöglicht.

Das Führungsmutterrohr 41 umgibt die Stellspindel 40 etwa über drei Viertel der Gesamtlänge des Zylindergehäuses 43 und wirkt mit seinem zweiten Rohrende 41b mit einer nicht bezeichneten Führungsmutter und einer Kupplung K4 zusammen.

Koaxial zu der Stellspindel 40 sind in dem Zylindergehäuse 43 nicht bezeichnete Druckfedern und weitere Kupplungen K1, K2, K3 hintereinander angeordnet, deren Funktion hier nicht weiter beschrieben werden soll.

Zu Aufbau und Funktion eines beispielhaften Gestängestellers 4 sei z.B. auf die Dokumente DE 28 35 305 A1 und EP 36 568 A1 verwiesen.

Beim Lösen der Schienenfahrzeugbremse 1 befinden sich alle Teile des Gestängestellers 4 in Ruhestellung. Der Abstand, hier ein Stellhub H, zwischen der Anschlagfläche 41c am ersten Gehäuseende 43a des Zylindergehäuses 43 des Gestängestellers 4 und einer Oberfläche 48b eines Vorsprungs 48c des Befestigungsabschnitts 48a des Stellkopfes 48 entspricht einem fahrzeugspezifischen Betätigungsweg der Schienenfahrzeugbremse 1.

Die Kupplung K3 wird durch die Vorspannkraft von ersten Druckfedern gegen den Druck einer zweiten Druckfeder im Eingriff gehalten; ebenso die Kupplung K1, wobei der Druck der ersten Druckfedern über das Zylindergehäuse 43 auf eine Vorschubmutter VM übertragen wird.

Wenn eine Bremsung eingeleitet wird, wirkt die Kraft des Bremszylinders 3 auf die Lasche 42 und zieht den gesamten Gestängesteller 4 (Figur 1) um den Betrag des Stellhubs H zu dem Befestigungsabschnitt 48a des Stellkopfes 48 hin (Figur 2).

Die Bremsklötze 5 wirken tatsächlich auf die Räder 2, wenn das Zylindergehäuse 43 mit seiner Anschlagfläche 43c an der Oberfläche 48b des Befestigungsabschnitts 48a des Stellkopfes 48 anliegt (siehe Figur 3).

Das Zylindergehäuse 43 selbst wird jedoch noch nicht fest gegen den Befestigungsabschnitt 48a des Stellkopfes 48 gedrückt. Die Kraft des Bremszylinders 3 wird über die ersten Druckfedern, das Zylindergehäuse 3, die Kupplung K1 und die Vorschubmutter VM auf die Stellspindel 41 übertragen (Figur 2).

**Figur 3** stellt eine schematische Schnittansicht einer ersten Erfassungseinheit 7 des Ausführungsbeispiels nach Figur 1 dar.

In der Figur 3 sind das erste Spindelende 40a der Stellspindel 40, das erste Rohrende 41a des Führungsmutterrohres 41 und der Stellkopf 48 mit seinem Befestigungsabschnitt 48a im Schnitt gezeigt.

Zudem sind die Befestigung der Lasche 42 an dem ersten Rohrende 41a des Führungsmutterrohres 41 und die Befestigung der Stellstange 47 mit ihrem Stangenabschnitt 47a dargestellt.

Die erste Erfassungseinheit 7 umfasst hier eine Halterung 70, einen ersten radialen Sensor 71 mit Anschlussleitung 71a und einen zweiten axialen Sensor 72 mit Anschlussleitung 72a.

Die Funktion der ersten Erfassungseinheit 7 besteht darin, eine Position der Stellstange 47 zu messen bzw. zu erfassen.

Die Halterung 70 ist mit einer Befestigung 70a an dem Stellkopf 48 angebracht. Ein Halteabschnitt 70b der Halterung 70 erstreckt sich zwischen dem Befestigungsabschnitt 48a des Stellkopfes 48 und der Lasche 42 über das Rohrende 41a des Führungsmutterrohres 41. An dem Halteabschnitt 70b sind die Sensoren 71 und 72 befestigt. Es ist möglich, dass auch nur einer der Sensoren 71 oder 72 angebracht ist, was aber keine exakte Positionsbestimmung zulässt, wie unten erläutert ist.

Der erste Sensor 71 ist so an dem Halteabschnitt 70b der Halterung 70 angebracht, dass die aktive, d.h. empfindliche, Seite radial über dem Bereich des Stellhubs H befindet. Dieser Bereich ist der Bereich zwischen der Anschlagfläche 41c am ersten Gehäuseende 43a des Zylindergehäuses 43 des Gestängestellers 4 und der Oberfläche 48b des Vorsprungs 48c des Befestigungsabschnitts 48a des Stellkopfes 48. Der erste Sensor 71 ist so angeordnet, dass der Erfassungsbereich der aktiven Seite auf das Rohrende 41a des Führungsmutterrohres 41 mit einem geringen radialen Erfassungsabstand zu der Außenfläche des Zylindergehäuses 43 des Gestängestellers 4 weist.

Der zweite Sensor 72 ist mit seiner aktiven Seite zu der Anschlagfläche 43c des Zylindergehäuses 43 weisend an dem Halteabschnitt 70b der Halterung 70 befestigt. Mit anderen Worten, der zweite Sensor 72 ist in Bezug auf die Mittelachse des Zylindergehäuses 43 axial ausgerichtet, wobei seine aktive Seite in einer Ebene liegt, die in Bezug auf die Oberfläche 48b des Vorsprungs 48c des Befestigungsabschnitts 48a des Stellkopfes 48 um ein bestimmtes axiales Maß in Richtung auf die Lasche 42 versetzt angeordnet ist.

Das mit einer Abdeckung (nicht gezeigt) versehene Zylindergehäuse 43 bewegt sich während der Lüftspieleinstellung in Bezug auf die Stellstange 47 innerhalb des Bereiches des Stellhubs H. Eine Anschlagposition der Anschlagfläche 43c des Zylindergehäuses 43 an der Oberfläche des Vorsprungs 48c des Befestigungsabschnitts 48a des Stellkopfes 48 ist in Figur 3 gestrichelt dargestellt. Daher kann der Bremszustand der Schienenfahrzeugbremse 1 anhand des aktuell gemessenen Abstands des Stellhubs H zwischen Zylindergehäuse 43 und der Stellstange 47 überwacht werden.

Sobald das Gehäuseende 43a des Zylindergehäuses 43 in den Erfassungsbereich des ersten (radialen) Sensors 71 kommt, gibt dieser ein Signal aus. Damit kann festgestellt werden, dass der Stellhub H verändert ist. Es kann jedoch nicht anzeigen, dass das Gehäuseende 43a die Oberfläche 48b des Vorsprungs 48c des Befestigungsabschnitts 48a des Stellkopfes 48 kontaktiert.

Dazu ist ein zweites Signal erforderlich. Hierzu dient der zweite, axiale Sensor 72, welcher erst dann ein Signal erzeugt, wenn das Gehäuseende 43c des Zylindergehäuses 43 am Anschlag der Oberfläche 48b steht und gleichzeitig in den Erfassungsbereich des zweiten Sensors 72 kommt.

Der zweite, axiale Sensor 72 kann auch für eine Abstandsmessung zu der Anschlagfläche 43b des Zylindergehäuses 43 ausgebildet sein. Mit anderen Worten, der zweite, axiale Sensor 72 kann eine Messung des Stellhubs H durchführen.

Die Sensoren 71, 72 können beispielsweise induktive Sensoren sein, es kann aber auch jede andere Methode eingesetzt werden, die in der Lage ist, die tatsächliche Position des Zylindergehäuses 43 in Bezug auf die Stellstange 47 zu bestimmen.

Der Vorteil besteht darin, dass sich der/die Sensor/en 71, 72 am Drehgestell oder Untergestell des zugehörigen Schienenfahrzeugs (nicht dargestellt) befindet, sodass sich die Anschlussleitung/en 71, 72 während des Zugbetriebs nicht bewegen und die Anschlussleitung/en 71, 72 daher sehr robust sein können.

**Figur 4** zeigt eine schematische Schnittdarstellung einer zweiten Erfassungseinheit 7a, und in **Figur 5** ist eine Schnittdarstellung einer dritten Erfassungseinheit 7b gezeigt.

Figur 4 und Figur 5 zeigen den Bereich des zweiten Gehäuseendes 43b des Zylindergehäuses 43 mit dem Schutzrohr 44 und der darin beweglichen Stellspindel 40 wie schon oben beschrieben.

Eine zweite Erfassungseinheit 7a umfasst hier einen dritten Sensor 73 mit einer Anschlussleitung 73a und eine Halterung des Sensors 73.

Das Schutzrohr 44 ist ein Fixpunkt, d.h. ortsfest. Während der Lüftspieleinstellung führt die Stellspindel 40 in dem Schutzrohr 44 eine axiale Bewegung aus, sodass der Bremszustand und/oder der Verschleißzustand der Bremsklötze 5 anhand des zwischen dem dritten Sensor 73 und einer Markierung auf der Stellspindel 40 gemessenen Abstands überwacht werden kann.

Der Sensor 73 kann beispielsweise ein induktiver Sensor sein, es kann aber auch jede andere Methode eingesetzt werden, die in der Lage ist, eine tatsächliche Position 40c, 40d, 40e der Markierung der Stellspindel 40 zu ermitteln. In Figur 4 sind drei bespielhafte Positionen 40c, 40d, 40e gezeigt. Dabei entspricht die Position 40c dem Zustand bei neuen Bremsklötzen 5, die Position 40d dem Zustand bei etwa zur Hälfte verschlissenen Bremsklötzen 5 und Position 40e einem maximal zulässigen Verschleiß der Bremsklötze 5.

Der Sensor 73 ist an seiner Halterung, die hier ein Körper des zweiten Dichtungsrings 45a ist, so befestigt, dass seine aktive Seite radial zu der Mittelachse der Stellspindel 40 angeordnet ist.

Es ist auch möglich, dass drei Sensoren 73 in axialen Abständen voneinander angeordnet sind, wobei jeder der drei Sensoren 73 einem zugeordneten Verschleißzustand der Bremsklötze 5 entspricht bzw. signalisiert, wenn die Markierung auf der Stellspindel 40 von diesem Sensor 73 erfasst wird.

**Figur 5** zeigt eine dritte Erfassungseinheit 7b.

Der Unterschied der dritten Erfassungseinheit 7b zu der zweiten Erfassungseinheit 7a besteht in der Anordnung eines vierten Sensors 74 mit seiner Anschlussleitung 74a, der mit einer Halterung 74b an der Stellspindel 40 an einem aus dem Schutzrohr 44 hervorstehenden Abschnitt befestigt ist.

Der vierte Sensor 74 wirkt mit einer an dem Dichtungsring 45a des ortsfesten Schutzrohres 44 angebrachten Referenz 74c zusammen, indem ein Abstand HA der aktiven Seite des vierten Sensors 74 zu dieser Referenz 74c gemessen wird. Die Referenz 74c kann beispielsweise ein Metallring sein, der an dem zweiten Dichtungsring 45a befestigt ist. Der zweite Dichtungsring 45a kann auch einstückig mit der Referenz 74 ausgebildet sein.

Der auf diese Weise gemessene Abstand ist proportional zu einer tatsächlichen Dicke des Bremsbelags 5.

Das Messgerät bzw. der vierte Sensor 74 kann beispielsweise ein induktiver Sensor sein, es kann aber auch jedes andere Verfahren eingesetzt werden, das in der Lage ist, den Abstand HA zu bestimmen.

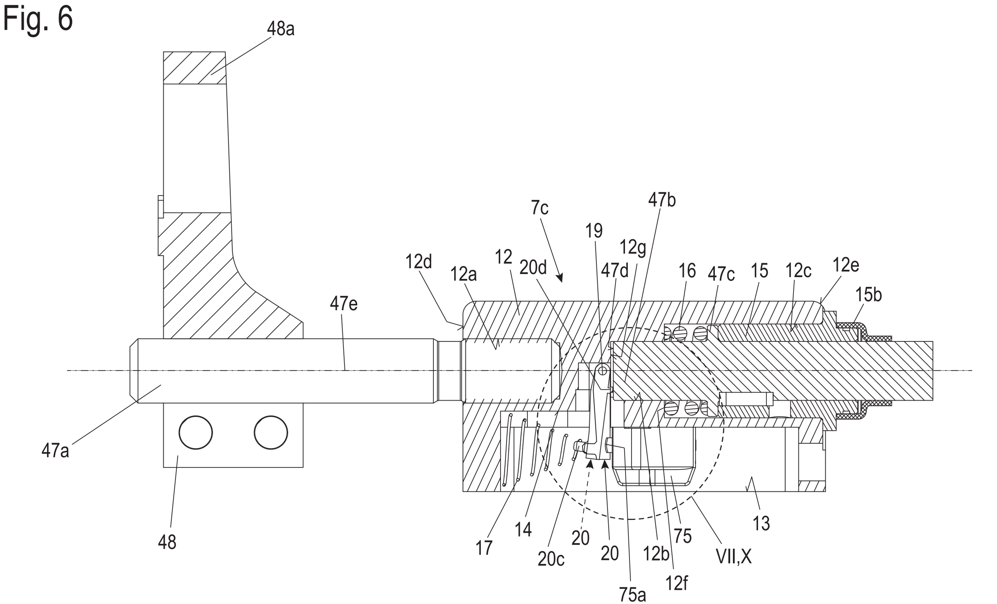

In **Figur 6** ist eine schematische Schnittdarstellung einer vierten Erfassungseinheit 7c dargestellt.

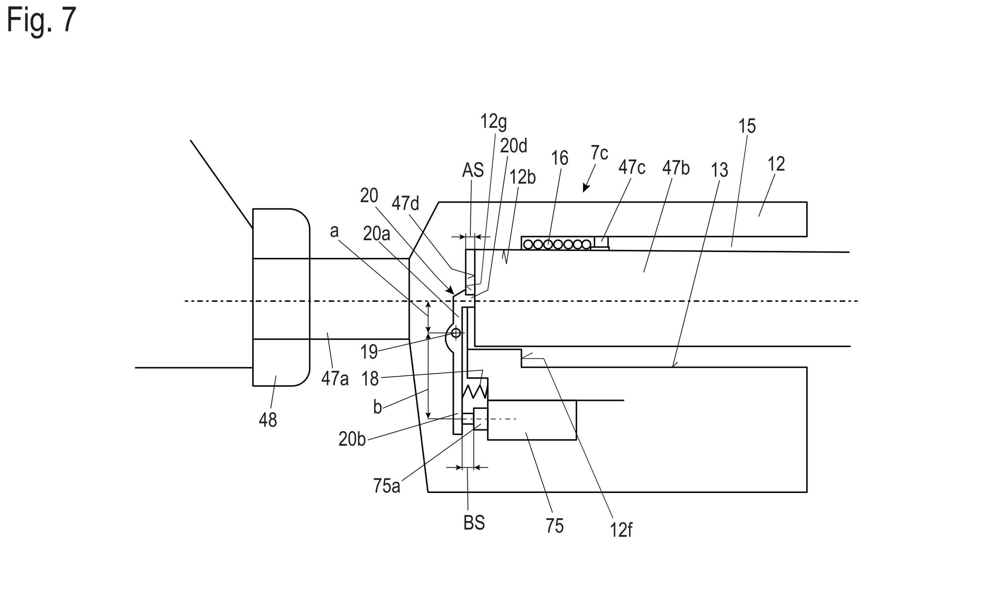

**Figur 7** zeigt eine schematische vergrößerte Darstellung des Bereiches VII, X aus Figur 6.

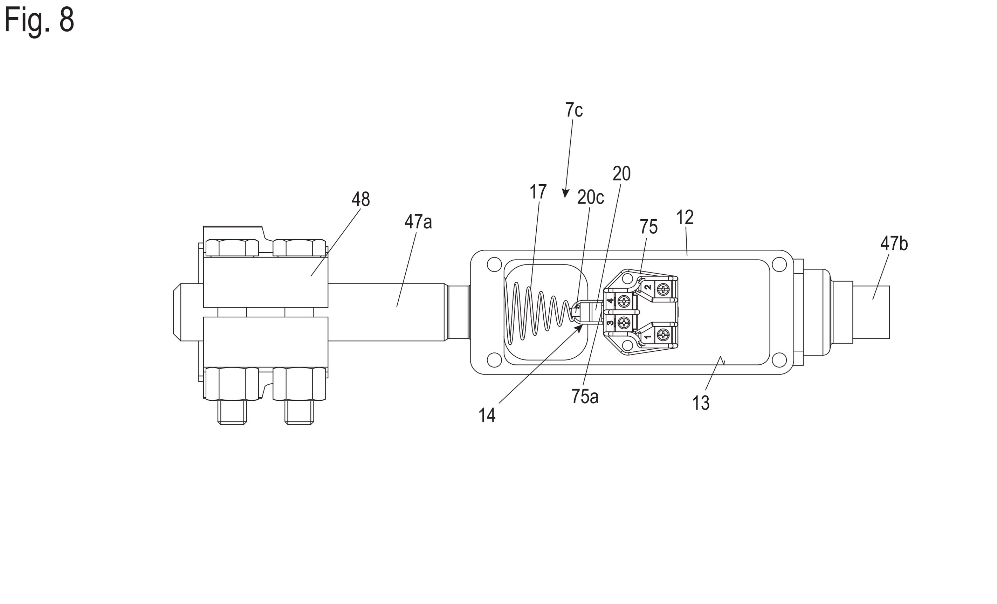

**Figur 8** stellt eine Seitenansicht der vierten Erfassungseinheit 7c dar.

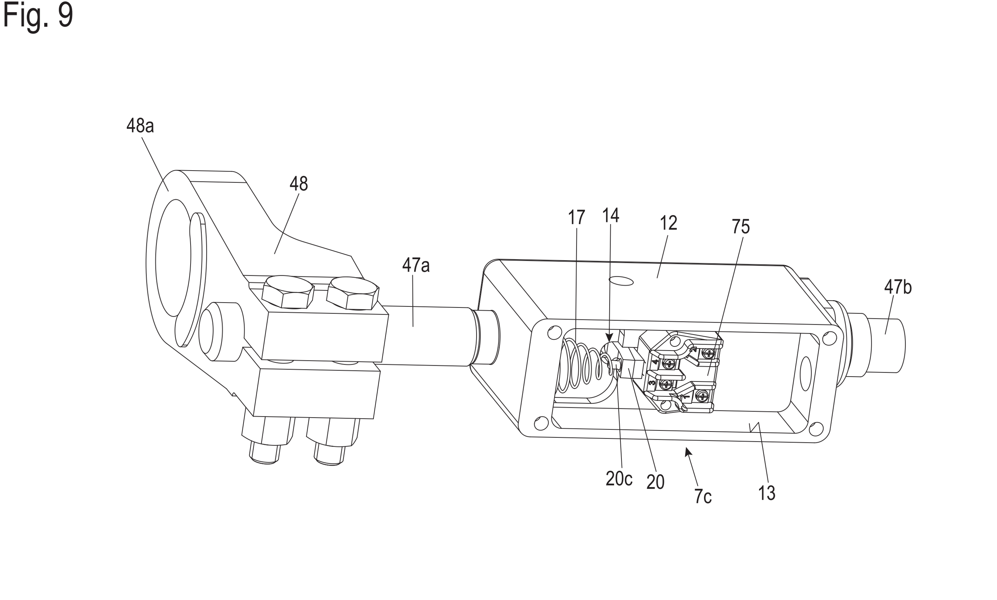

**Figur 9** zeigt eine schematische Perspektivansicht der vierten Erfassungseinheit 7c.

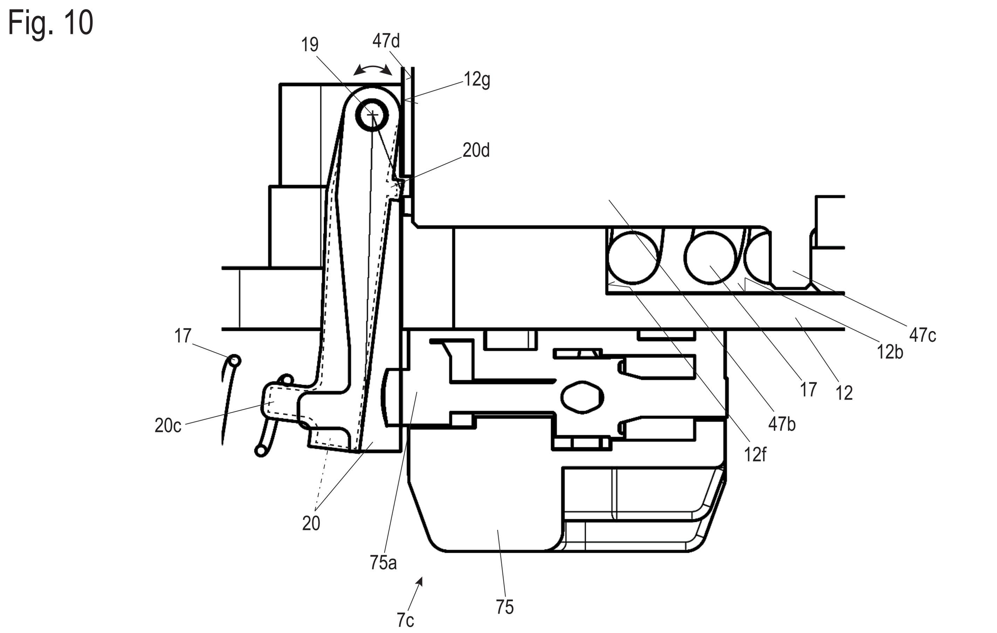

In **Figur 10** ist eine vergrößerte Teilseitenansicht der vierten Erfassungseinheit 7c des Bereiches VII, X aus Figur 67c gezeigt.

Die vierte Erfassungseinheit 7c bildet ein Messgerät für eine Teleskophubmessung der Stellstange 47.

Die vierte Erfassungseinheit 7c umfasst ein Gehäuse 12, mit Bohrungen 12a, 12b, 12c, Ausnehmungen 13, 14 und eine Buchse 15

Die Stellstange 47 ist hier geteilt und weist zwei Bauteile auf, nämlich den Stangenabschnitt 47a und einen weiteren Stangenabschnitt 47b.

Das Gehäuse 12 ist in Reihe mit den zwei Stangenabschnitten 47a und 47b der Stellstange 47 angeordnet.

Das Gehäuse 12 bildet mit dem zweiten Stellstangenabschnitt 47b der Stellstange 47 einen Teleskopmechanismus, der unten noch erläutert wird.

Der Stangenabschnitt 47a ist mit seinem freien Ende wie oben beschrieben mit dem Stellkopf 48 fest verbunden. Das andere Ende des Stangenabschnitts 47a ist in einer ersten Bohrung 12a in einer Stirnseite 12d des Gehäuses 12, die zum Stellkopf 48 weist, aufgenommen und in dem Gehäuse 12 befestigt, beispielsweise über ein Gewinde, Bolzen oder ähnlich. Die erste Bohrung 12a ist eine Sackbohrung.

Die zweite Bohrung 12b und die dritte Bohrung 12c sind abgestuft von der anderen Stirnseite 12e des Gehäuses 12 in dieses eingeformt. Die Bohrungen 12a, 12b, 12c und die Stellstange 47 haben eine gemeinsame Mittelachse 47e. Zwischen der zweiten Bohrung 12b und der dritten Bohrung 12c ist ein Abstufung 12f angeordnet.

In die zweite Bohrung 12b ist der zweite Stangenabschnitt 47b der Stellstange 47 mit seinem zum Stellkopf 48 weisenden Ende eingesetzt. Ein Kraftspeicherelement 16 ist zwischen der Abstufung 12f der abgestuften Bohrungen 12b, 12c und einem umlaufenden Kragen 47c auf dem zweiten Stangenabschnitt 47b angeordnet. Die zweite Bohrung 12b weist einen Boden 12g auf.

Die Buchse 15 ist in der dritten Bohrung 12c eingesetzt, wobei an dem freien Ende der Buchse 15 ein umlaufender Kragen eine axiale Fixierung der Buchse 15 in der dritten Bohrung 12c bildet. In einer Innenbohrung 15a der Buchse 15 ist der zweite Stangenabschnitt 47b so eingeschoben, dass das zum Stellkopf 48 weisende Ende den umlaufenden Kragen 47c des zweiten Stangenabschnitts 47b kontaktiert.

Der zweite Stangenabschnitt 47b ist in der Buchse 15 in deren Innenbohrung 15a axial verschiebbar und verdrehsicher angeordnet. Eine Verdrehsicherung ist in diesem Beispiel durch eine Passfeder ausgebildet.

Der zweite Stangenabschnitt 47b ist gegenüber der Buchse 15 mit einem geeigneten Schutzelement 15b, z.B. ein Faltenbalg, gegen Eindringen von Feuchtigkeit und Fremdkörpern versehen. Eine Befestigung des Faltenbalgs 15a, z.B. mit Schlauchschelle(n) ist nicht gezeigt, aber leicht vorstellbar.

Das erste Kraftspeicherelement 13 ist hier eine Druckfeder und übt eine Kraft auf den zweiten Stangenabschnitt 47b über den umlaufenden Kragen 47c aus. So wird der axial verschiebbare zweite Stangenabschnitt 47b gegen die ortsfeste Buchse 15 gedrückt. Dabei entsteht ein Freiraum zwischen der Stirnseite 47d des zweiten Stangenabschnitts 47b und dem Boden 12g der zweiten Bohrung 12b, welcher ein Axialspiel AS des zweiten Stangenabschnitts 47b in Bezug auf die Buchse 15 bildet.

Das Gehäuse 12 weist eine erste Ausnehmung 13 und eine zweite Ausnehmung 14, beide von der Unterseite in das Gehäuse 12 eingeformt, auf.

In der ersten Ausnehmung 13 ist ein Sensor 75, der unten noch weiter beschrieben wird, ein Teil eines Schwenkhebels 20 und ein Kraftspeicherelement 17 angeordnet. Die zweite Ausnehmung 14 nimmt den Schwenkhebel 20 auf.

Die Stirnfläche 47d des zweiten Stangenabschnitts 47b steht mit dem Schwenkhebel 20 in Kontakt, der um eine Schwenkachse 19 verschwenkbar ist. Das Kraftspeicherelement 17, hier eine Druck-Kegelfeder, drückt den Schwenkhebel 20 gegen die Stirnfläche 47d des zweiten Stangenabschnitts 47b.

Der Schwenkhebel 20 umfasst zwei Hebelarme 20a, 20b. Eine Vorderseite des Schwenkhebels 20 weist zu dem Stellkopf 48, eine Rückseite in die Gegenrichtung.

Der Schwenkhebel 20 ist in seiner betätigten (verschwenkten) Position in Figur 6 und Figur 10 gestrichelt dargestellt.

Der erste Hebelarm 20a kontaktiert die Stirnfläche 47d des zweiten Stangenabschnitts 47b über einen Vorsprung 20d. Die Kraft des Kraftspeicherelementes 17 wird in einen weiteren Vorsprung 20c an der Vorderseite des zweiten Hebelarms 20b eingeleitet. Ein Endbereich der Rückseite des zweiten Hebelarms 20b steht mit einem Betätiger 75a des Sensors 75 in Kontakt.

Die Schwenkachse 19 des Schwenkhebels 20 kann an einem Ende des ersten Hebelarms 20a (siehe Figur 6) oder zwischen dem ersten Hebelarm 20a und dem zweiten Hebelarm 20b (siehe Figur 7) angeordnet sein. Bei der letzteren Ausführung ist ein Kraftspeicherelement 18 vorgesehen, welches an der Rückseite des zweiten Hebelarms 20b angreift.

Figur 7 stellt geometrische Verhältnisse der vierten Erfassungseinheit 7c dar.

Der zweite Stangenabschnitt 47b steht in Ruhestellung, das Axialspiel AS zwischen dem Boden 12g der zweiten Bohrung 12b des Gehäuses 15 und der Stirnfläche 47d des zweiten Stangenabschnitts 47b ist dabei maximal.

Das Axialspiel AS beträgt in diesem Beispiel etwa 1 bis 2 mm.

Der Betätiger 75a des Sensors 75 ist im Ruhestand mit einem Betätigerspiel BS.

Der erste Hebelarm 20a des Schwenkhebels 20 weist eine Länge mit einem Maß a auf, welches um einen bestimmten Faktor kleiner ist als eine Länge mit deinem Maß b des zweiten Hebelarms 20b.

Das Betätigerspiel BS errechnet sich aus dem Axialspiel AS und den Maßen a und b der Hebelarme 20a, 20b wie folgt:

$$AB = AS * (b/a)$$

Beim Betätigen der Schienenfahrzeugbremse 1 wird die Stellstange des Gestängestellers 4 gedrückt.

Verfügt die Stellstange über den Teleskopmechanismus mit kleinem Hub (der Hub ist das Axialspiel AS von etwa 1 mm), wird die Einstellfunktion nicht beeinträchtigt und dieser Hub kann zur Betätigung des Sensors 75 der dritten Erfassungseinheit 7c verwendet werden. Der Sensor 75 liefert ein Signal, welches zur Erkennung der Bremslösefunktion verwendet wird.

Der Schwenkhebel 20 hat die Funktion, den kleinen Hub des zweiten Stangenabschnitts 47b, d.h. der Stellstange 47, abzutasten und zu multiplizieren, denn der Betätiger 75a weist das Betätigerspiel BS und eine große Hysterese auf (siehe obige Beschreibung). Auf diese Weise ist es möglich, dass auf den Betätiger 75a bei Betätigung durch das Kraftspeicherelement 17 nur eine kleine Kraft ausgeübt wird, da er nur für kleine Kräfte ausgelegt ist.

Der Hub des zweiten Stangenabschnitts 47b, d.h. der Stellstange 47, muss klein gehalten werden da sonst die Nachstellerfunktion des Gestängestellers 4 negativ beeinflusst wird. Aus diesem Grund ist eine Hubvergrösserung durch die Übersetzung des Schwenkhebels 20 notwendig.

Der Sensor 75 kann ein elektromechanischer Schalter sein. In dem gezeigten Beispiel sind in einem Schalter-Kunststoffgehäuse zwei Kontaktsätze eingegossen. Diese Kontaktsätze werden mittels des Betätigers 75a gemeinsam betätigbar und weisen hier einen Öffnerkontakt (Anschlüsse 1/2) und einen Schließerkontakt (Anschlüsse 3/4) auf.

Anstelle eines elektromechanischen Schalters kann der Sensor 75 auch auf einem anderen Prinzip beruhen, z.B. ein Halbleiterschalter oder dergleichen, oder eine Kombination aus verschiedenen Prinzipien sein.

Befestigungselemente, Elektrokabel, Schlauchschellen und Balg sind nicht dargestellt, aber leicht vorstellbar.

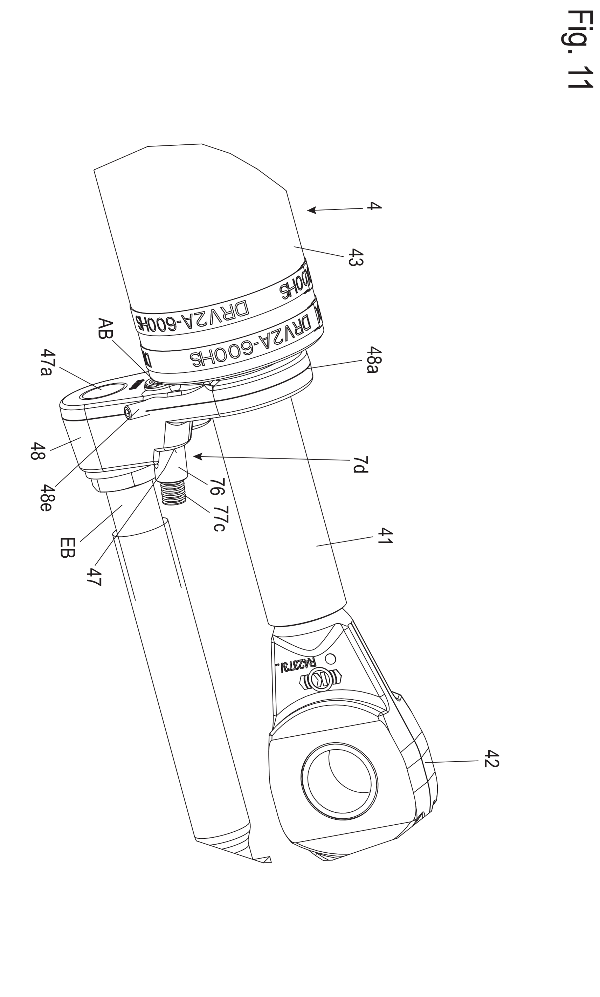

**Figur 11-14** zeigen schematische Ansichten einer fünften Erfassungseinheit 7d im Bereich des Stellkopfes 48 nach Figur 1

**Figur 11** zeigt eine schematische perspektivische Teilansicht der fünften Erfassungseinheit in einer Grundstellung, in welcher keine Bremsung erfolgt.

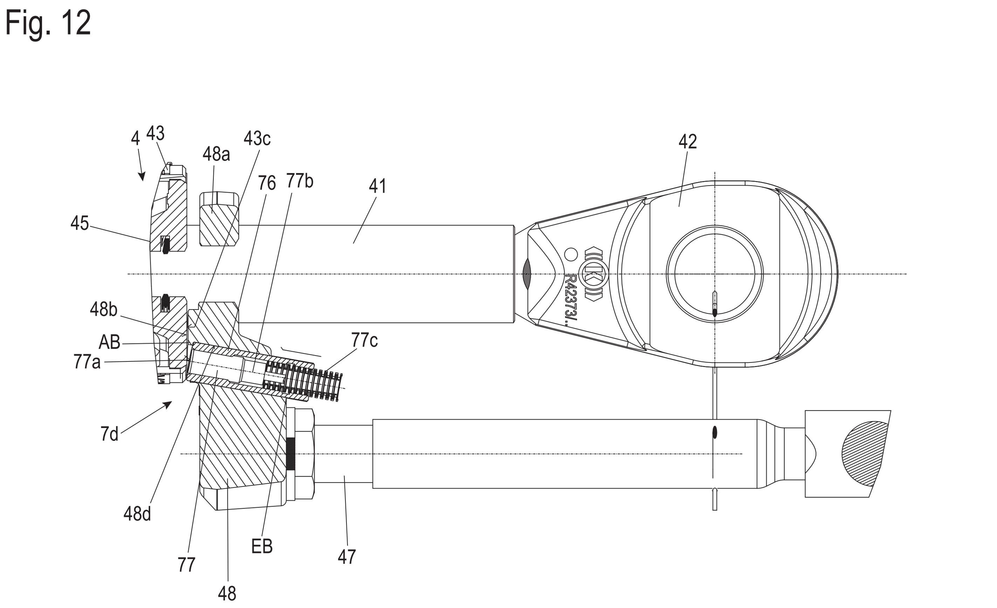

In **Figur 12** ist die fünfte Erfassungseinheit 7d zusammen mit dem Stellkopf 48 nach Figur 11 in einer Teilschnittdarstellung gezeigt.

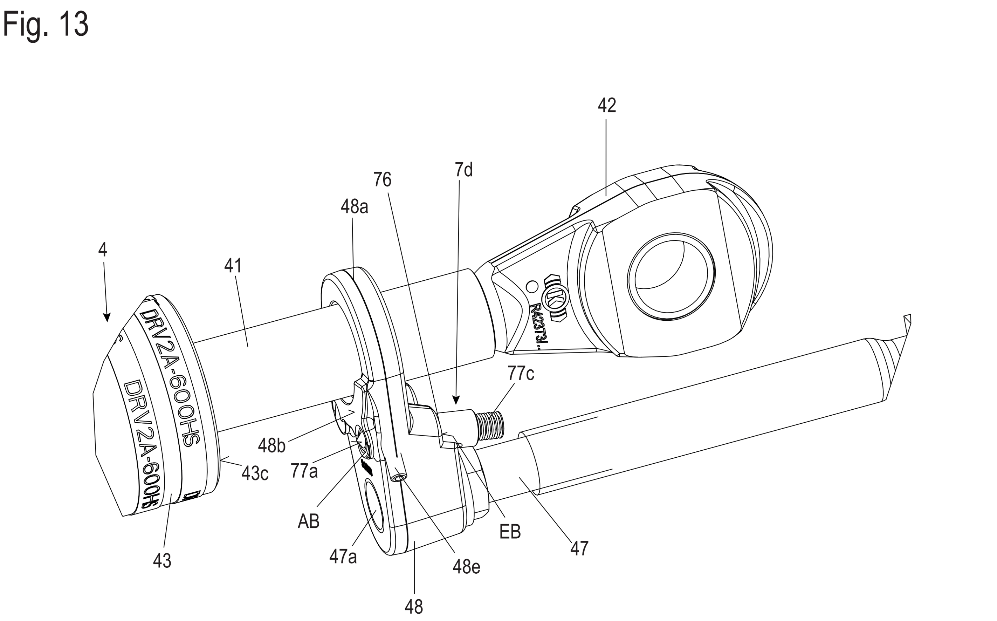

**Figur 13** stellt die fünfte Erfassungseinheit 7d mit dem Stellkopf 48 gemäß Figur 11 in einer schematischen perspektivischen Teilansicht in einer Bremsstellung dar.

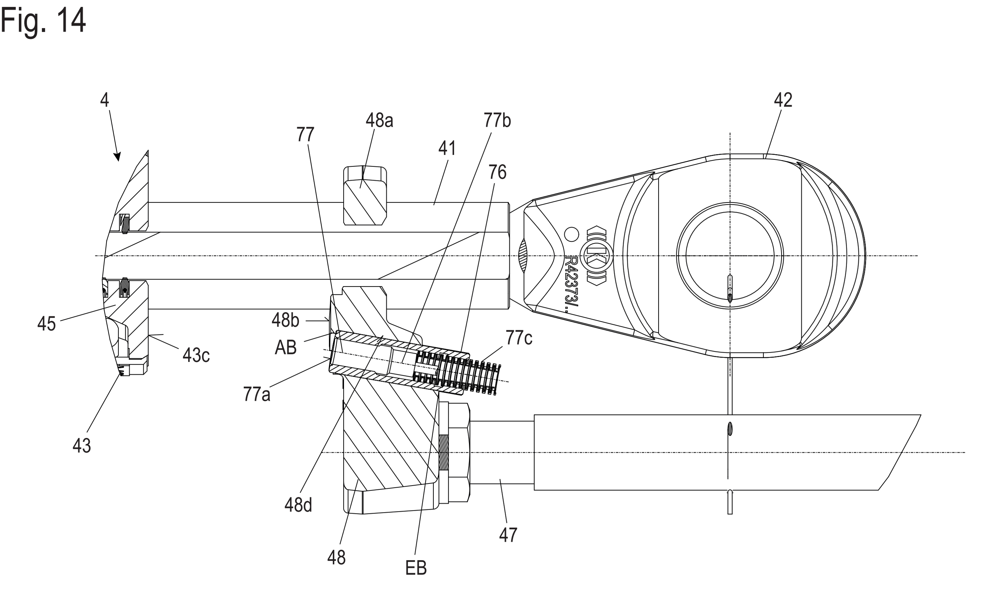

**Figur 14** zeigt eine Teilschnittdarstellung der fünften Erfassungseinheit 7d zusammen mit dem Stellkopf 48 nach Figur 13.

Der Stellkopf 48 ist wie in Figur 3 dargestellt mit den Stangenabschnitt 47a der Stellstange 47 verbunden. Ebenso ist die Verbindung des Befestigungsabschnitts 48a des Stellkopfes 48 mit dem Führungsmutterrohr 41 wie in Figur 3 ausgeführt.

Im Unterschied zu der ersten Erfassungseinheit 7 nach Figur 3 umfasst hier die fünfte Erfassungseinheit 7d eine Hülse 76 und einen Sensor 77. Der Sensor 77 ist in diesem Beispiel als ein induktiver Sensor ausgebildet.

Die fünfte Erfassungseinheit 7d ist im eingebauten Zustand in einer schräg angeordneten durchgehenden Bohrung 48d des Stellkopfes 48 in einem Verbindungsabschnitt von Stellkopf 48 und Befestigungsabschnitt 48a aufgenommen.

Die Bohrung 48d des Stellkopfes 48 weist eine erste Öffnung AB und eine zweite Öffnung EB auf. Die erste Öffnung AB weist zu dem Zylindergehäuse 43 des Gestängestellers 4, wobei die zweite Öffnung EB zu der Lasche 42 weist.

Die schräg angeordnete durchgehende Bohrung 48d verläuft hier in einem Winkel zu dem Führungsmutterrohr 41 und der Stellstange 47, wobei ein Abstand der ersten Öffnung AB der Bohrung 48d zu der Stellstange 41 größer ist als ein Abstand der zweiten Öffnung EB der Bohrung 48d zu der Stellstange.

Der Sensor 77 weist eine aktive, d.h. empfindliche, Stirnseite 77a und eine Anschlussseite 77b mit einem Kabelschutzrohr 77c auf.

Der Sensor 77 selbst ist in der Hülse 76 vormontiert (mit Kabelschutzrohr 77c) eingesetzt. Ein nicht gezeigtes, aber leicht vorstellbares Anschlusskabel des Sensors 77 erstreckt sich von dessen Anschlussabschnitt 77b durch das Kabelschutzrohr 77c hindurch in Richtung der Stellstange 47.

Zum Einbau der fünften Erfassungseinrichtung 7d wird die Hülse 76 mit dem Sensor 77 mit dessen Stirnseite 77a voran in die Bohrung 48d durch die zweite Öffnung EB der Bohrung 48d in den Stellkopf 48 eingeschoben, bis dass die aktive Stirnseite 77a des Sensors 77 in der ersten Öffnung AB der Bohrung 48d angeordnet ist und in der in Figur 11 und 12 gezeigten Grundstellung dicht an der Anschlagfläche 43c des Zylindergehäuses 43 zur Zusammenwirkung mit dieser angeordnet ist.

Nach Durchführung dieser Positionierung der Hülse 76 mit dem Sensor 77 in der Bohrung 48d wird die Hülse 76 axial fixiert. Dies kann beispielsweise mittels einer Wurmschraube erfolgen, die in einem Befestigungsdom 48e eingeschraubt wird und die Hülse durch Formschluss festbefestigt.

Der Vorteil dieser Ausführung und Anordnung der fünften Erfassungseinheit 7d besteht darin, dass der Sensor 77 sehr gut vor Steinschlag und anderen äußeren Einwirkungen geschützt ist. Zudem kann das Anschlusskabel sehr nahe zur Stellstange 47 befestigt und gut geschützt zum Wagenkasten weitergeleitet werden.

Bei Beschädigung des Anschlusskabels des Sensors 77 oder bei defektem Sensor 77 kann die Hülse 76 mit dem Sensor 77 auf einfache Weise aus der Bohrung 48d des Stellkopfes 48 demontiert und komplett getauscht werden. Dies ist auch im Feld möglich, da die Hülse 76 mit dem Sensor 77 ohne spezielle Werkzeuge oder mittels üblichem Werkzeug sehr einfach getauscht werden kann.

In der in Figur 11, 12 gezeigten Grundstellung, in welcher keine Bremsung erfolgt, kann dieser Zustand mittels der fünften Erfassungseinheit 7d dadurch erfolgen, dass der Sensor 77 mit seiner aktiven Stirnseite 77a die Anschlagfläche 43c des Zylindergehäuses 43 sensiert und ein Signal generiert, welches diesem Zustand zugeordnet ist.

In der Bremsstellung (Figur 13, 14) ist die aktive Stirnseite 77a des Sensors 77 der fünften Erfassungseinheit 7d von der Anschlagfläche 43c des Zylindergehäuses 43 entfernt, wobei der Sensor 77 nicht mehr aktiviert ist bzw. keine Anschlagfläche 43c mehr sensiert und dementsprechend kein Signal generiert.

Natürlich kann der Sensor 77 auch so ausgebildet sein, dass er bei Aktivierung in der Grundstellung kein Signal erzeugt, dafür aber in der Bremsstellung.

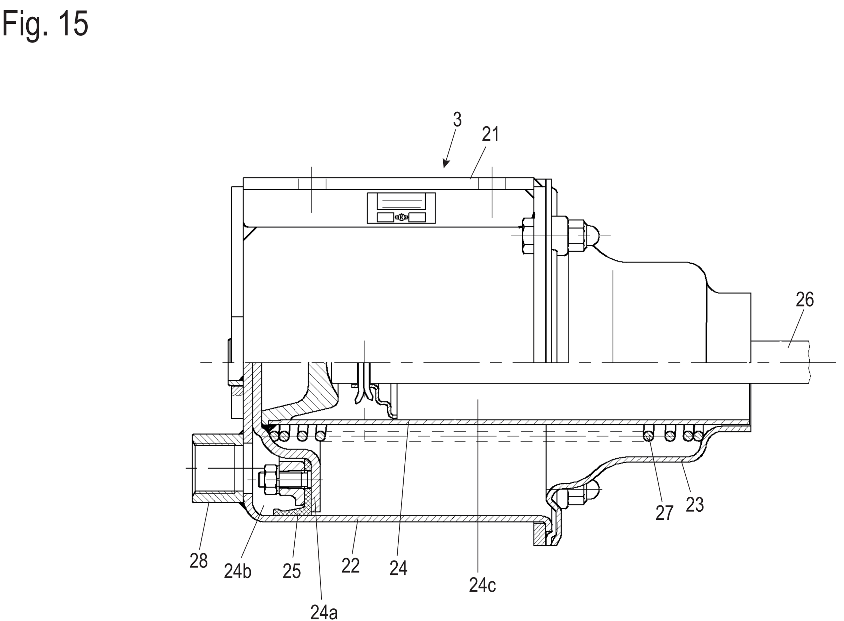

**Figur 15** zeigt eine schematische Teilschnittansicht eines üblichen Bremszylinders 3 in Verbindung mit einer externen Gestängerückholfeder.

Der Bremszylinder 3 weist einen Zylinderkörper 22 mit einem Anschluss 28 und einen Zylinderdeckel 23 auf. In einer Zylinderbuchse 24 ist ein längsbeweglicher Kolben 24a angeordnet, welcher die Zylinderbuchse 24 in einen Arbeitsraum 24b und einen Freiraum 24c teilt. Eine Kolbenrückholfeder 27 ist in den Zylinder integriert. Eine Kolbendichtung 25 dichtet den Arbeitsraum 24b gegenüber dem unbelasteten Zylinderraum 24c ab. Ein Montagerahmen 21 dient zur Befestigung des Bremszylinders 3 am Fahrzeug- bzw. Drehgestellrahmen. Da eine Kolbenstange 26 um einen kleinen Winkel in jede Richtung frei schwenken kann, passt sie sich jeder erforderlichen seitlichen Auslenkung ohne Behinderung an.

Zum Bremsen, d.h. für einen Bremsvorgang, wird der Kolben 24a mit Druckluft beaufschlagt, die durch den Anschluss 28 in den Arbeitsraum 24b strömt und den Kolben 24a gegen die Kraft der Kolbenrückholfeder 27 bewegt. Die Kolbenstange 26 wird durch diese Bewegung mitgenommen und überträgt die Bewegung des Kolbens 24a mit der auf das Bremsgestänge 1a.

Zum Lösen der Bremse wird der Bremszylinder 3, d.h. der Arbeitsraum 24b entlüftet, die Kolbenrückholfeder 27 drückt den Kolben 24a in die Ausgangsposition zurück. Die außerhalb des Bremszylinders 3 angeordnete Gestängerückholfeder 27a (hier nicht gezeigt, aber vorstellbar) bewirkt, dass das Bremsgestänge 1a und die Kolbenstange 26 dem Kolben 24a folgen.

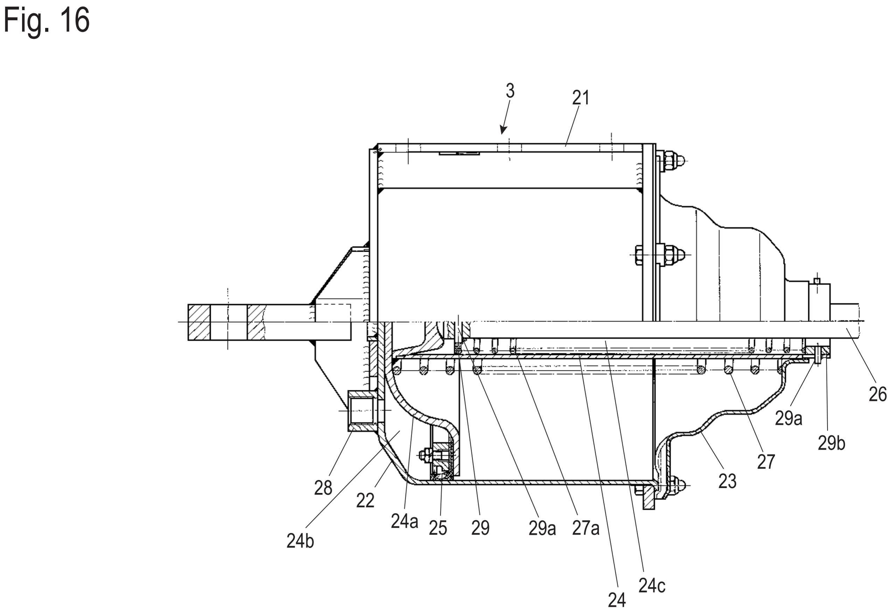

**Figur 16** stellt eine schematische Teilschnittansicht eines üblichen Bremszylinders 3 mit einer eingebauten Gestängerückholfeder 27a.

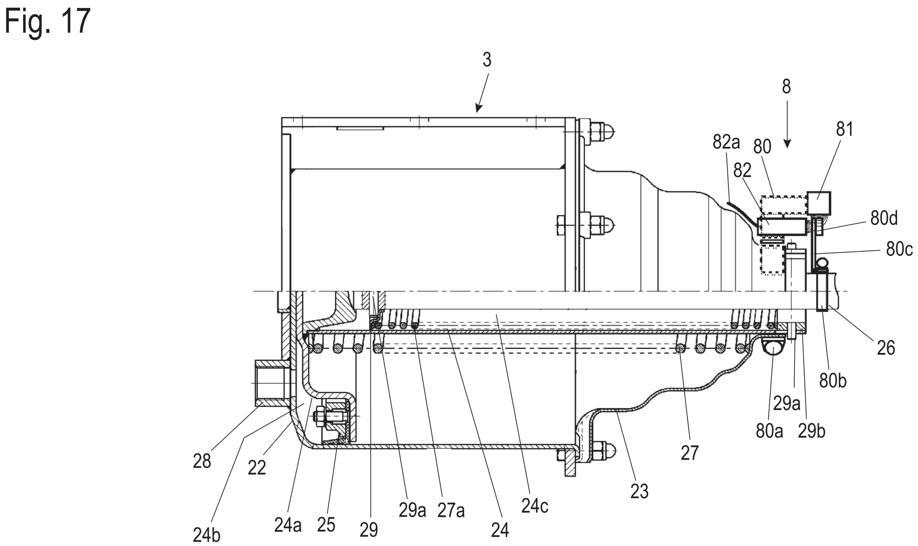

Der Bremszylinder 3, der in Figur 17 gezeigt ist, ähnelt im Aufbau der Ausführung nach Figur 15 und besteht ebenfalls aus Zylinderkörper 22 mit Anschluss 28 an die Arbeitskammer 24b und Zylinderdeckel 23. Neben dem Kolben 24a und Zylinderbuchse 24, der Kolbenstange 26 und der Kolbenrückholfeder 27 enthält der Zylinderkörper 22 auch die Gestängerückholfeder 27a. Wie beim bisherigen üblichen Bremszylinder 3 dichtet die Kolbendichtung 25 den Arbeitsraum 24b ebenfalls vom unbelasteten Zylinderraum 24c ab.

Die zusätzlich in der Zylinderbuchse 24 eingebaute Gestängerückholfeder 27a stützt sich an einem Ende auf einer Führungsplatte 29 ab, die von einem Zylinderstift 29a an der Kolbenstange 26 gehalten wird, und am anderen Ende an einem Ring 29b und Stiften 29a, die durch einen Bajonettverschluss an der Zylinderbuchse 24 gehalten werden. Die Gestängerückholfeder 27a verriegelt die Kolbenstange 26 zwangsweise gegen den Kolben 24a, um jegliche Totbewegung zu verhindern.

Die Bremsfunktion des Bremszylinders 3 nach Figur 16 ist identisch mit der des Bremszylinders 3 des vorherigen Typs nach Figur 15. Zum Lösen der Bremse wird der Bremszylinder 3 entlüftet und die Kolbenrückholfeder 27 bringt den Kolben 24a in die Ausgangsposition zurück. Die in diesem Bremszylindertyp integrierte Gestängerückholfeder 27a verriegelt die Kolbenstange 26 zwangsweise gegen den Kolben 24a und bewegt so das Bremsgestänge 1a gleichmäßig in die Ausgangsposition.

Beim Betätigen der Handbremse 6 wird die Kolbenstange 26 gegen die Kraft der Gestängerückholfeder 27a aus dem Kolben 24a und der Zylinderbuchse 24 herausgezogen ohne den Kolben 24a mitzunehmen. Beim Lösen der Bremse wird das Bremsgestänge 1a durch die Kraft der Gestängerückholfeder 27a in die Ausgangsposition zurückgebracht.

Es wird angemerkt, dass beim Betätigen der Handbremse 6 das Gestänge die Kolbenstange 26 zwangsbewegt, so dass die Sensoren, welche die Bewegung der Kolbenstange 26 detektieren, auch die aktivierte (eingebremste) Handbremse 6 detektieren, was sehr wichtig für die Funktion der Bremsprobe ist.

In **Figur 17** ist eine schematische Teilschnittdarstellung eines Bremszylinders 3 mit einer sechsten Erfassungseinheit 8.

Die sechste Erfassungseinheit 8 bildet eine Zustandsüberwachung der Kolbenstange 26 des Bremszylinders 3.

Die Kolbenstange 26 bewegt sich, wenn die Schienenfahrzeugbremse 1 betätigt oder gelöst wird. Daher kann der Bremsstatus der Schienenfahrzeugbremse 1 anhand des Kolbenstangenstatus beobachtet werden. Unter dem Begriff Kolbenstangenstatus ist der Zustand der Kolbenstange 26 zu verstehen, der hier die Zustände "eingefahren" und "ausgefahren" sowie Zwischenzustände und einen Bewegungszustand einnehmen kann.

Der Zustand "eingefahren" bedeutet hier, dass die Schienenfahrzeugbremse 1 gelöst ist. Die Schienenfahrzeugbremse 1 ist betätigt bzw. angelegt, wenn die Kolbenstange 26 den Zustand "ausgefahren" eingenommen hat.

Die sechste Erfassungseinheit 8 umfasst eine Halterung 80, einen radialen Sensor 81, einen axialen Sensor 82 und eine Referenz 80d.

Die Halterung 80 ist hier mittels eines Klemmrings 80a an dem freien Ende des Zylinderdeckels 23 befestigt. Die Halterung 80 trägt beide Sensoren 81, 82.

Die Referenz 80d ist hier eine Metallplatte und an einem freien Ende eines Halters 80c angebracht. Der Halter 80c ist ein Winkelelement, dessen kurzer

Schenkel mit einem Klemmring 80b an der Kolbenstange 26 befestigt ist, welche aus dem freien Ende des Zylinderdeckels 23 hervorsteht. Der lange Schenkel des Winkelelementes steht in radialer Richtung auf der Kolbenstange 26.

Der radiale Sensor 81 ist derart an der Halterung 80 befestigt, dass seine aktive Seite radial zu der Kolbenstange 26 und somit zu der Referenz 80d mit einem notwendigen Abstand ausgerichtet ist.

Der axiale Sensor 82 ist so an der Halterung 80 angebracht, dass seine aktive Seite axial parallel zu der Kolbenstange 26 in einem notwendigen Abstand auf die Referenz 80d ausgerichtet ist.

In Figur 17 ist der "eingefahrene" Zustand der Kolbenstange 26 dargestellt. In diesem Zustand befindet sich die Referenz 80d in den Erfassungsbereichen beider Sensoren 81, 82. Die Sensoren 81, 82 erzeugen in diesem Zustand ein Signal, welches den "eingefahrenen" Zustand der Kolbenstange 26 angibt.

Bei einer Bewegung der Kolbenstange 26 in den "ausgefahrenen" Zustand bewegt sich die mit der Kolbenstange 26 fest verbundene Referenz 80d aus den Erfassungsbereichen beider Sensoren 81, 82 heraus, wobei diese kein Signal mehr liefern. Der "ausgefahrene" Zustand kann dann mittels eines weiteren Signals, das z.B. von der Betätigungssteuerung des Bremszylinders 3 oder von einem weiteren Sensor, z.B. am Bremsgestänge 1a, geliefert wird, eindeutig erkannt werden.

Die beiden Sensoren 81, 82 können beispielsweise induktive Sensoren sein, es kann aber auch jede andere Methode eingesetzt werden, die in der Lage ist, die tatsächliche Position der Kolbenstange 26 zu bestimmen. Es kann auch nur ein einzelner Sensor 81, 82 zur Anwendung kommen.

Ein Vorteil besteht darin, dass sich die sechste Erfassungseinheit 8 mit den Sensoren 81, 82 am Drehgestell oder Untergestell des zugehörigen Schienenfahrzeugs ortsfest befindet, sodass sich Anschlussleitungen 82a (es ist nur eine Anschlussleitung gezeigt) der Sensoren 81, 82 während des Zugbetriebs nicht bewegen und daher die Anschlussleitung(en) 82a daher sehr robust sein kann (können).

Auswertungen der von den Erfassungseinheiten 7, 7a, 7b, 7c, 7d, 8, 9 gelieferten Signale werden im Folgenden beispielhaft beschrieben.

Die Signale können in drei Modi überwacht werden:

- Nur beim Bremsentest zu Beginn des Betriebs

Ein Vorteil besteht darin, dass die Auswertungslogik einfacher sein kann und dennoch das Bremstestverfahren beschleunigen (die visuelle Beobachtung durch den Menschen ersetzen) und zuverlässiger machen kann. Ein Nachteil ist es, dass kein kontinuierliches Signal bereitgestellt wird.

- Messung beim Bremsen

Die Überwachung des Bremssignals beginnt beim Betätigen der Schienenfahrzeugbremse 1 und stoppt nach dem Lösen der Schienenfahrzeugbremse 1.

Ein Vorteil dabei ist es, dass der Bremsvorgang beobachtet werden kann, was das Sicherheitsniveau erhöhen könnte.

Nachteilig ist eine komplexere Auswertungslogik.

- Kontinuierliche Messung

Diese hat den Vorteil, dass je nach Messtechnik/Erfassungseinheiten nicht nur die Bremsung, sondern auch andere Fehler und Diagnosedaten erkannt werden können.

Hierbei wird jedoch die komplexeste Logik benötigt.

Bei der Bremssignalauswertung können in unterschiedlichen Fällen zwei Logickreise zum Einsatz kommen. Bei der Überwachung der Bewegung des Gestängestellers 4 wird auf die Patentanmeldung DE 10 2021 112 130 A1 sowie auf die Patentschrift AT 525000B1 verwiesen. Hier wird eine Bremszangeneinheit mit einer Verschleißsensorvorrichtung und ein Verfahren zum Erfassen von Verschleiß von Bremsbelägen und Bremsscheibe einer Bremszangeneinheit einer Scheibenbremse beschrieben.

Zur Überwachung der Bremsposition ist eine Signalauswertung in dem Dokument EP 3 815 993 A1 beschrieben, auf welches hier verwiesen wird. Dieses Dokument betrifft Bremsen, Bremsbelagverschleiß und Radverschleißüberwachung

Es wird zudem auf das Dokument DE 10 2020 124 645 A1 verwiesen, in welchem eine Bremszangeneinheit mit einer Verschleißsensorvorrichtung und ein Verfahren zum Erfassen von Verschleiß einer Bremszangeneinheit beschrieben wird.

Für eine Distanzmessung sei auf das Dokument DE 10 2020 107 835 A1 verwiesen, welches einen Betriebsbremszylinder, insbesondere einer Klotzbremse, mit Bremszustandserfassung, insbesondere für ein Schienenfahrzeug, und ein Verfahren zum Erfassen eines Bremszustands eines Betriebsbremszylinders, insbesondere einer Klotzbremse, beschreibt.

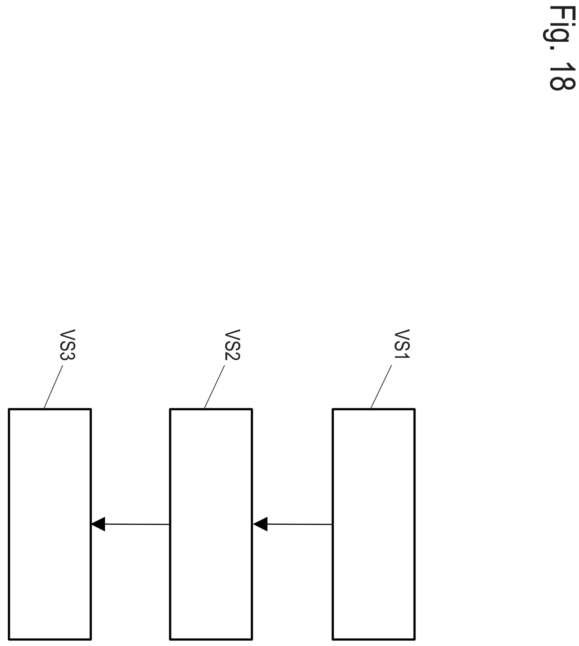

In **Figur 18** ist ein schematisches Flussdiagramm eines erfindungsgemäßen Verfahrens zum Überwachen einer Schienenfahrzeugbremse 1 dargestellt.

Eine Schienenfahrzeugbremse 1 mit einer Überwachungseinrichtung 10 wird in einem ersten Verfahrensschritt VS1 mit Erfassungseinheiten 7, 7a, 7b, 7c, 7d, 8, 9 bereitgestellt. Sensoren 71, 72, 73, 74, 75, 77, 81, 82, 90 der Erfassungseinheiten 7, 7a, 7b, 7c, 7d, 8, 9 werden an eine elektrische Energieversorgung angeschlossen.

In einem zweiten Verfahrensschritt VS2 werden von den Sensoren 71, 72, 73, 74, 75, 77, 81, 82, 90 der Erfassungseinheiten 7, 7a, 7b, 7c, 7d, 8, 9 jeweils elektrische Signale in Abhängigkeit von Zuständen der Schienenfahrzeugbremse 1 erzeugt.

Die so erhaltenen Signale werden In einem dritten Verfahrensschritt VS3 in drei Modi überwacht, wobei in einem ersten Modus ein Überwachen nur bei einem Bremsentest zu Beginn des Betriebs, in einem zweiten Modus ein Überwachen beim Bremsen, und in einem dritten Modus ein kontinuierliches Überwachen durchgeführt wird.

Die überwachten Signale werden in der Auswerteeinheit 11 mit vorher gespeicherten Referenzwerten verglichen. In Abhängigkeit von den so erhaltenen Vergleichswerten gibt die Auswerteeinheit 11 Ergebniswerte als Ausgabe in optischer, akustischer, haptischer oder/und elektronischer Form aus. Unter dem Begriff "elektronische Form" sind sowohl analoge als auch digitale Daten der Ergebniswerte und anderer Signale zu verstehen.

In der obigen Beschreibung wird eine kabelgebundene Datenkommunikation vorgestellt. Es ist natürlich auch möglich, dass diese auch vollständig oder teilweise drahtlos, z.B. per Funk, Infrarot, Ultraschall usw., realisiert werden kann.

Die Erfindung ist durch das oben angegebene Ausführungsbeispiel nicht eingeschränkt, sondern im Rahmen der Ansprüche modifizierbar.

**Bezugszeichenliste**

| | |
|---|---|
| 1 | Schienenfahrzeugbremse |
| 1a | Bremsgestänge |
| 1b | Aufhängung |
| 2 | Rad |
| 3 | Bremszylinder |
| 4 | Gestängesteller |
| 5 | Bremsklotz |
| 6 | Handbremse |
| 7, 7a, 7b, 7c; 7d; 8; 9 | Erfassungseinheit |
| 10 | Überwachungseinrichtung |
| 11 | Auswerteeinheit |
| 12 | Gehäuse |
| 12a, 12b, 12c | Innenbohrung |
| 12d, 12e | Stirnseite |
| 12f | Abstufung |
| 12g | Boden |
| 13, 14 | Ausnehmung |
| 15 | Buchse |
| 15a | Innenbohrung |
| 15b | Schutzelement |
| 16, 17, 18 | Kraftspeicherelement |
| 19 | Schwenkachse |
| 20 | Schwenkhebel |
| 20a, 20b | Hebelarm |
| 20c, 20d | Vorsprung |
| 21 | Montagerahmen |
| 22 | Zylinderkörper |
| 23 | Zylinderdeckel |
| 24 | Zylinderbuchse |
| 24a | Kolben |
| 24b | Arbeitskammer |
| 24c | Zylinderraum |
| 25 | Kolbendichtung |
| 26 | Kolbenstange |
| 27 | Kolbenrückholfeder |
| 27a | Gestängerückholfeder |
| 28 | Anschluss |
| 29 | Führungsplatte |
| 29a | Stift |
| 29b | Ring |
| 40 | Stellspindel |
| 40a, 40b | Spindelende |
| 40c, 40d, 40e | Position |
| 41 | Führungsmutterrohr |
| 41a, 41b | Rohrende |
| 42 | Lasche |
| 43 | Zylindergehäuse |
| 43a, 43b | Gehäuseende |
| 43c | Anschlagfläche |
| 44 | Schutzrohr |
| 45, 45a | Dichtungsring |
| 47 | Stellstange |
| 47a, 47b | Stangenabschnitt |

| 47c | Kragen |
| 47d | Stirnseite |
| 47e | Mittelachse |
| 48 | Stellkopf |
| 48a | Befestigungsabschnitt |
| 48b | Oberfläche |
| 48c | Vorsprung |
| 48d | Bohrung |
| 48e | Befestigungsdom |

| 70 | Halterung |
| 70a | Befestigung |
| 70b | Halteabschnitt |
| 71, 72, 73, 74 | Sensor |
| 71a, 72a, 73a, 74a | Anschlussleitung |
| 74b | Halterung |
| 74c | Referenz |
| 75 | Sensor |
| 75a | Betätiger |
| 76 | Hülse |
| 77 | Sensor |
| 77a | Stirnseite |
| 77b | Anschlussseite |
| 77c | Kabelschutzrohr |

| 80 | Halterung |
| 80a, 80b | Klemmring |
| 80c | Halter |
| 80d | Referenz |
| 81, 82 | Sensor |
| 82a | Anschlussleitung |

| 90 | Sensor |

| a, b | Maß |
| AB, EB | Öffnung |
| AS | Axialspiel |
| BS | Betätigerspiel |
| H | Stellhub |
| HA | Abstand |
| K1, K2, K3, K4 | Kupplung |
| VM | Vorschubmutter |
| VS1, VS2, VS3 | Verfahrensschritt |

**Patentansprüche**

1. Schienenfahrzeugbremse (1), insbesondere für Güterwaggons, umfassend ein Bremsgestänge (1a) mit Bremsklötzen (5), einen Bremszylinder (3), einen Gestängesteller (4) und eine Überwachungseinrichtung (10), **dadurch gekennzeichnet, dass** die Überwachungseinrichtung (10) Erfassungseinheiten (7, 7a, 7b, 7c, 7d, 8, 9) mit jeweiligen Sensoren (71, 72, 73, 74, 75, 77, 81, 82, 90) aufweist, deren Versorgung mit elektrischer Energie mittels eines Zugriffs auf ein elektrisches Energieversorgungsnetz eines zuzuordnenden Schienenfahrzeugs gebildet ist.

2. Schienenfahrzeugbremse (1) nach Anspruch 1, **dadurch gekennzeichnet, dass** eine erste Erfassungseinheit (7) dem Gestängesteller (4) zugeordnet ist und mindestens einen Sensor (71, 72) aufweist, welcher einen Stellhub (H) zwischen einem Zylindergehäuse (43) des Gestängestellers (43) und einer Position einer Stellstange (47) des Gestängestellers (4) erfasst.

3. Schienenfahrzeugbremse (1) nach Anspruch 2, **dadurch gekennzeichnet, dass** der Stellhub (H) ein Abstand zwischen einem ersten Gehäuseende (43a) des Zylindergehäuses (43) des Gestängestellers (4) und einem Stellkopf (48, 48a) ist, welcher mit der Stellstange (47) des Gestängestellers (4) fest verbunden ist.

4. Schienenfahrzeugbremse (1) nach Anspruch 2 oder 3, **dadurch gekennzeichnet, dass** die erste Erfassungseinheit (7) einen in Bezug auf die Stellstange (47) radial mit seiner aktiven Seite angeordneten Sensor (71) oder/und einen weiteren Sensor (72) aufweist, welcher mit seiner aktiven Seite axial in Bezug auf die Stellstange (47) angeordnet ist.

5. Schienenfahrzeugbremse (1) nach einem der Ansprüche 2 bis 4, **dadurch gekennzeichnet, dass** der mindestens eine Sensor (71, 72) oder die beiden Sensoren (71, 72) an der ortsfesten Stellstange (47) direkt oder indirekt befestigt sind.

6. Schienenfahrzeugbremse (1) nach einem der vorstehenden Ansprüche, **dadurch gekennzeichnet, dass** eine zweite Erfassungseinheit (7a) mit mindestens einem Sensor (73) dem Gestängesteller (4) zugeordnet ist, wobei der mindestens eine Sensor (73) an einem ortsfesten Schutzrohr (44) einer Stellspindel (40) des Gestängestellers (4) angeordnet ist und eine Position der beweglichen Stellspindel (40) erfasst.

7. Schienenfahrzeugbremse (1) nach Anspruch 6, **dadurch gekennzeichnet, dass** die Stellspindel (40) mit mindestens einer von dem mindestens einen Sensor (73) erfassbaren Markierung versehen ist, deren Position einem Verschleißzustand der Bremsklötze (5) entspricht.

8. Schienenfahrzeugbremse (1) nach einem der vorstehenden Ansprüche, **dadurch gekennzeichnet, dass** eine dritte Erfassungseinheit (7b) mit mindestens einem Sensor (74) dem Gestängesteller (4) zugeordnet ist, wobei der mindestens eine Sensor (74) an einer beweglichen Stellspindel (40) des Gestängestellers (4) befestigt ist und einen Abstand zu einer ortsfesten Referenz (74c), die an einem ortsfesten Schutzrohr (44) direkt oder indirekt angebracht ist, erfasst, wobei dieser Abstand proportional zu einer tatsächlichen Dicke des Bremsbelags (5) ist.

9. Schienenfahrzeugbremse (1) nach einem der vorstehenden Ansprüche, **dadurch gekennzeichnet, dass** eine vierte Erfassungseinheit (7c) mit mindestens einem Sensor (75) dem Gestängesteller (4) zugeordnet ist, wobei der mindestens eine Sensor (75) in einem Gehäuse (12) zwischen einem ersten Stangenabschnitt (47a) der Stellstange (47) und einem zweiten Stangenabschnitt (47b) der Stellstange (47) des Gestängestellers (4) angeordnet ist, wobei das Gehäuse (15) in Reihe zwischen den Stangenabschnitten (47a, 47b) der Stellstange (47) angeordnet ist.

10. Schienenfahrzeugbremse (1) nach Anspruch 9, **dadurch gekennzeichnet, dass** der erste Stangenabschnitt (47a) mit seinem Ende mit einem Stellkopf (48) fest verbunden ist und mit dem anderen Ende mit dem Gehäuse (15) fest verbunden ist, wobei der zweite Stangenabschnitt (47b) mit dem ersten Stangenabschnitt (47a) fluchtend in dem Gehäuse (15) direkt oder indirekt längsverschiebbar gelagert ist.

11. Schienenfahrzeugbremse (1) nach Anspruch 10, **dadurch gekennzeichnet, dass** das Gehäuse (12) mit dem zweiten Stellstangenabschnitt (47b) der Stellstange (47) einen Teleskopmechanismus mit einem kleinen Hub bildet, der in einem Größenbereich von 1 mm liegt, wobei dieser Hub den Sensor (75) mittels eines Schwenkhebels (20) betätigt.

12. Schienenfahrzeugbremse (1) nach Anspruch 11, **dadurch gekennzeichnet, dass** eine Stirnfläche (47d) des zweiten Stangenabschnitts (47b), welche zu dem ersten Stangenabschnitt (47a) weist, mit dem verschwenkbaren Schwenkhebel (20) in Kontakt steht, welcher einen Betätiger (75a) des mindestens einen Sensors (75) kontaktiert.

13. Schienenfahrzeugbremse (1) nach einem der vorstehenden Ansprüche, **dadurch gekennzeichnet, dass** eine fünfte Erfassungseinheit (7d) mit mindestens einem Sensor (77) dem Gestängesteller (4) zugeordnet ist, wobei der Sensor (77) in einer Bohrung (48d) des Stellkopfes (48) aufgenommen ist und mit einem Abschnitt eines Zylindergehäuses (43) zusammenwirkt und so eine Grundstellung und eine Bremsstellung erfasst.

14. Schienenfahrzeugbremse (1) nach Anspruch 13, **dadurch gekennzeichnet, dass** der Sensor (77) in einer Hülse (76) angeordnet ist.

15. Schienenfahrzeugbremse (1) nach Anspruch 13 oder 14, **dadurch gekennzeichnet, dass** die Bohrung (48d) des Stellkopfes (48) schräg zu der Stellstange (47) angeordnet ist.

**16.** Schienenfahrzeugbremse (1) nach einem der vorstehenden Ansprüche, **dadurch gekennzeichnet, dass** eine sechste Erfassungseinheit (8) dem Bremszylinder (3) zugeordnet ist und mindestens einen Sensor (81, 82) aufweist, welcher eine Position einer Kolbenstange (26) des Bremszylinders (3) erfasst und ortsfest am Bremszylinder (3) befestigt ist.

**17.** Schienenfahrzeugbremse (1) nach Anspruch 16, **dadurch gekennzeichnet, dass** die sechste Erfassungseinheit (8) einen in Bezug auf die Kolbenstange (26) des Bremszylinders (3) radial mit seiner aktiven Seite angeordneten Sensor (81) und einen weiteren Sensor (82) aufweist, welcher mit seiner aktiven Seite axial in Bezug auf die Kolbenstange (26) des Bremszylinders (3) angeordnet ist, wobei die Sensoren (81, 82) mit einer Referenz (80d) zusammenwirken, die an der beweglichen Kolbenstange (26) des Bremszylinders (3) befestigt ist.

**18.** Schienenfahrzeugbremse (1) nach einem der vorstehenden Ansprüche, **dadurch gekennzeichnet, dass** mindestens eine weitere Erfassungseinheit (9) mit mindestens einem Sensor (90) mindestens einer Aufhängung (1b) des Bremsgestänges (1a) zugeordnet ist, wobei Halterungen der Aufhängungen (1b) Fixpunkte sind, an denen zugehörige Bauteile des Bremsgestänges (1a) verschwenkbar angelenkt sind, wobei Verschwenkbewegungen dieser Bauteile im Verhältnis zum Bremsvorgang und zum tatsächlichen Verschleißzustand der Bremsklötze (5) von dem mindestens einen Sensor (90) erfasst werden.

**19.** Schienenfahrzeugbremse (1) nach Anspruch 18, **dadurch gekennzeichnet, dass** der mindestens eine Sensor (90) als Winkelaufnehmer ausgebildet ist.

**20.** Schienenfahrzeugbremse (1) nach einem der vorstehenden Ansprüche, **dadurch gekennzeichnet, dass** das elektrische Energieversorgungsnetz des Schienenfahrzeugs Digitale Automatische Kupplungen DAC aufweist.

**21.** Schienenfahrzeug, insbesondere Güterwaggon, mit einer Schienenfahrzeugbremse (1) nach einem der vorstehenden Ansprüche.

**22.** Verfahren zum Überwachen einer Schienenfahrzeugbremse 1 eines Schienenfahrzeugs nach Anspruch 21, insbesondere Güterwaggon, nach einem der Ansprüche 1 bis 20, **gekennzeichnet, durch** die Verfahrensschritte

    (VS1)    Bereitstellen eines Schienenfahrzeugbremse (1) mit einer Überwachungseinrichtung (10) mit Erfassungseinheiten (7, 7a, 7b, 7c, 7d, 8, 9) und Anschließen von Sensoren (71, 72, 73, 74, 75, 77, 81, 82) der Erfassungseinheiten (7, 7a, 7b, 7c, 7d, 8, 9) an ein elektrisches Energieversorgungsnetz des Schienenfahrzeugs mit Digitaler Automatischer Kupplung DAC;

    (VS2)    Erzeugen von jeweiligen elektrischen Signalen von den Sensoren (71, 72, 73, 74, 75, 77, 81, 82) der Erfassungseinheiten (7, 7a, 7b, 7c, 7d, 8, 9) in Abhängigkeit von Zuständen der Schienenfahrzeugbremse (1); und

    (VS3)    Überwachen der so erhaltenen Signale und Vergleichen der erhaltenen Signale in einer Auswerteeinheit (11) mit vorher gespeicherten Referenzwerten und Ausgeben von Ergebniswerte des Vergleichens als Ausgabe in optischer, akustischer, haptischer oder/und elektronischer Form.

**23.** Verfahren nach Anspruch 22, **dadurch gekennzeichnet, dass** in dem dritten Verfahrensschritt VS3 Überwachen die erhaltenen Signale in drei Modi überwacht werden, wobei in einem ersten Modus ein Überwachen nur bei einem Bremsentest zu Beginn des Betriebs, in einem zweiten Modus ein Überwachen beim Bremsen, und in einem dritten Modus ein kontinuierliches Überwachen durchgeführt wird.

Fig. 1

# Fig. 2

Fig. 3

EP 4 755 738 A1

Fig. 4

Fig. 5

# Fig. 6

Fig. 7

Fig. 8

48

47a

14

75a

17

7c

20c

20

75

12

13

47b

Fig. 9

EP 4 755 738 A1

Fig. 10

Fig. 11

Fig. 12

Fig. 13

Fig. 14

Fig. 15

Fig. 16

# Fig. 17

EP 4 755 738 A1

Fig. 18

VS1

VS2

VS3

**EUROPÄISCHER RECHERCHENBERICHT**

Nummer der Anmeldung

EP 25 21 3545

Europäisches Patentamt
European Patent Office
Office européen des brevets

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | AU 2021 395 250 A9 (KNORR BREMSE SYSTEME [DE]) 16. Mai 2024 (2024-05-16) * Fig. 1-4; S. 1, Z. 30 - S. 2, Z. 2, S. 9, Z. 5-26, S. 11, Z. 15-32; Ansprüche 1, 11, 12, 14 * ----- | 1-15, 20-22 | INV. B60T13/66 B60T17/22 B61H1/00 F16D65/56 F16D66/02 |
| X | AU 2021 395 262 B2 (KNORR BREMSE SYSTEME [DE]) 1. August 2024 (2024-08-01) * Fig. 1-4; S. 1, Z. 29 - S. 2, Z. 5, Z. 19-23, S. 8, Z. 28 - S. 9., Z. 9, S. 12, Z. 8-15, S. 13, Z. 1-5; Anspr. 1 * ----- | 1-15, 20-22 | B61H15/00 F16D65/28 |
| X | CA 3 096 976 A1 (OVINTO CVBA [BE]) 24. Oktober 2019 (2019-10-24) * Fig. 1-2; Abs. [0013], [0016]; Anspr. 1 * ----- | 1-15, 20-22 | |
| X | CA 2 210 182 A1 (TECH SERV & MARKETING INC [US]) 14. Mai 1998 (1998-05-14) * Fig. 1-2; Abs. [0007]-[0010] * ----- | 1,18,19, 22 | |
| X | EP 4 137 374 A1 (AMSTED RAIL CO INC [US]) 22. Februar 2023 (2023-02-22) * Fig. 1-11, 22A-23E; Abs. [0075]-[0088], [0110], [0123]-[0140] * ----- | 1,16,17, 21-23 | RECHERCHIERTE SACHGEBIETE (IPC) B60T B61H F16D |

Der vorliegende Recherchenbericht wurde für alle Patentansprüche erstellt

| Recherchenort | Abschlußdatum der Recherche | Prüfer |
|---|---|---|
| München | 26. März 2026 | Kirov, Youlian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 25 21 3545

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-03-2026

| Im Recherchenbericht angeführtes Patentdokument | Datum der Veröffentlichung | Mitglied(er) der Patentfamilie | Datum der Veröffentlichung |
|---|---|---|---|
| AU 2021395250 A9 | 16-05-2024 | AU 2021395250 A1 | 27-07-2023 |
| | | CN 116568577 A | 08-08-2023 |
| | | EP 4011718 A1 | 15-06-2022 |
| | | US 2024043049 A1 | 08-02-2024 |
| | | WO 2022122275 A1 | 16-06-2022 |
| AU 2021395262 B2 | 01-08-2024 | AU 2021395262 A1 | 27-07-2023 |
| | | CN 116568578 A | 08-08-2023 |
| | | EP 4011717 A1 | 15-06-2022 |
| | | ES 2949799 T3 | 03-10-2023 |
| | | US 2024043050 A1 | 08-02-2024 |
| | | WO 2022122299 A1 | 16-06-2022 |
| CA 3096976 A1 | 24-10-2019 | CA 3096976 A1 | 24-10-2019 |
| | | EP 3556624 A1 | 23-10-2019 |
| | | EP 3781448 A1 | 24-02-2021 |
| | | US 2021114578 A1 | 22-04-2021 |
| | | WO 2019202032 A1 | 24-10-2019 |
| CA 2210182 A1 | 14-05-1998 | AU 739311 B2 | 11-10-2001 |
| | | CA 2210182 A1 | 14-05-1998 |
| | | US 6006868 A | 28-12-1999 |
| EP 4137374 A1 | 22-02-2023 | AU 2019300171 A1 | 04-03-2021 |
| | | BR 112021000342 A2 | 06-04-2021 |
| | | CA 3106016 A1 | 16-01-2020 |
| | | EP 3820751 A1 | 19-05-2021 |
| | | EP 4137374 A1 | 22-02-2023 |
| | | EP 4137375 A1 | 22-02-2023 |
| | | EP 4400384 A2 | 17-07-2024 |
| | | EP 4400385 A2 | 17-07-2024 |
| | | US 2020079343 A1 | 12-03-2020 |
| | | US 2023035869 A1 | 02-02-2023 |
| | | US 2024351566 A1 | 24-10-2024 |
| | | US 2025388204 A1 | 25-12-2025 |
| | | WO 2020014692 A1 | 16-01-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2835305 A1
- EP 36568 A1
- DE 102021112130 A1
- AT 525000 B1
- EP 3815993 A1
- DE 102020124645 A1
- DE 102020107835 A1